(19)

Europäisches
Patentamt
European
Patent Office
Office européen
des brevets

(11) **EP 2 586 520 A1**

(12) **EUROPEAN PATENT APPLICATION**

(43) Date of publication:
**01.05.2013 Bulletin 2013/18**

(51) Int Cl.:
***B01D 65/08*** (2006.01)        ***B01D 63/06*** (2006.01)

(21) Application number: **12002934.3**

(22) Date of filing: **26.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.10.2011 KR 20110109868**

(71) Applicant: BKT Co., Ltd.
**Yuseong-Gu
Daejeon
305-510 (KR)**

(72) Inventors:
• **Park, Gi Taek
Daejeon 305-768 (KR)**
• **Kim, Sang Ug
Chungcheongnam-do 339-751 (KR)**

(74) Representative: **Banzer, Hans-Jörg
Kraus & Weisert
Patent- und Rechtsanwälte
Thomas-Wimmer-Ring 15
80539 München (DE)**

(54) **Filtering apparatus having fixed-type chaos-flow inducer**

(57)      Provided is a filtering apparatus having a fixed-type chaos-flow inducer that saves energy as well as sufficiently washes a separation membrane in an environment of high concentration by efficiently generating chaos flow by using a structure of a fixed type.

FIG. 23

(A)

EP 2 586 520 A1

**Description**

CROSS-REFERENCE TO RELATED APPLICATIONS

This application claims priority under 35 U.S.C. §119 to Korean Patent Application No. 10-2011-0109868, filed on 10.26.2011 in the Korean Intellectual Property Office, the disclosure of which is incorporated herein by reference in its entirety.

TECHNICAL FIELD

The present invention relates to a filtering apparatus having a fixed-type chaos-flow inducer.

BACKGROUND

Filtration technology is widely used from potable water production and waste water treatment. Especially the potable water contamination accidents occurred in United States in 1993 and in Japan in 1996 became the decisive opportunity for the introduction of membrane process in the potable water treatment process. At present, the filtration technology utilizing membrane is being expanded further.

A membrane is a film with fine pores smaller than few $\mu$ms. There are a precision filter membrane > an ultra filter membrane > a nano filter membrane > a reverse-osmosis filter membrane, which are arrayed according to their pore sizes. The membrane removes contaminants by Sieve effect, in which the membrane passes particles smaller than the pore on the surface and blocks the particles bigger than the pore. It is an environment-friendly treatment process because safe potable water is produced by almost perfectly removing the hazardous substances in water such as organic/inorganic substances, crypto-parasites and bacteria. The process also uses fewer amounts of chemicals than the existing water treatment processes. At present, the precision filter membrane and the ultra filter membrane are used in potable water production and treatment of domestic/industrial wastewater. The nano filter membrane and the reverse-osmosis filter membrane are used to produce pure water, which contains negligible amount of contaminants.

The membrane is used since it is easy to secure the fixed quality of water. Especially in Korea, there are wide variations in the quality of raw water in the four seasons. In spring and fall, raw water gets impact of tide. In summer, water has high degree of muddiness. In winter, water temperature is very low. Therefore, it is almost impossible to secure constant quality of water through existing sand filtering methods. There are other advance methods utilizing UV or ozone; however, they also have their own issues. Especially the recent issues of protozoa such as Giardia and Cryptosporidium cannot be resolved by existing methods and it is difficult to secure stable water quality. The membrane solves most of these issues and it is possible to produce fixed quality of water without getting serious impact from the raw water quality or the existence of protozoa. The easy operation and management of membrane water treatment are other advantages. The membrane filtration process may be fully automated. Most of potable water production and self cleaning processes may be performed by the automatic operation. Therefore, it is useful even when specialized process-managing manpower is insufficient.

However, the membrane filtration process also has a disadvantage that contaminants accumulate and clog the membrane as filtration goes on and the filtration efficiency decreases. Therefore, the membrane process has a limitation that the membrane needs to be effectively washed at the proper timings. Accordingly, there have been various studies and efforts on the effective washing of the membrane.

Regarding the contamination-prevention technology of membrane, there are clogging-prevention technology by fluid velocity (hereafter called fluid velocity utilizing technology), clogging-prevention technology by vibration and turbulence (hereafter vibration utilizing technology) and clogging-prevention technology utilizing swirl (hereafter swirl utilizing technology). In case of the fluid velocity utilizing technology and the vibration utilizing technology, the membrane contamination is prevented by maintaining the linear velocity of fluid in the membrane fast or using compressed air. These technologies achieve some effects in the low-concentration environment; however, it is difficult to achieve required washing efficiency in the high concentration environment. The membrane is not properly washed and remains clogged, which results in the requirement of membrane replacement or washing by chemicals. The membrane operation is also abnormally performed.

In the swirl utilizing technology, swirl is generated on the fluid flowing around the membrane and the contaminants are removed from the membrane by the swirl. The clogging-prevention technology utilizing swirl provides with better surface flow than the fluid velocity utilizing technology or the vibration utilizing technology. Therefore, the swirl utilizing technology has an advantage in preventing contamination in high concentration environment and maintaining stable membrane capability.

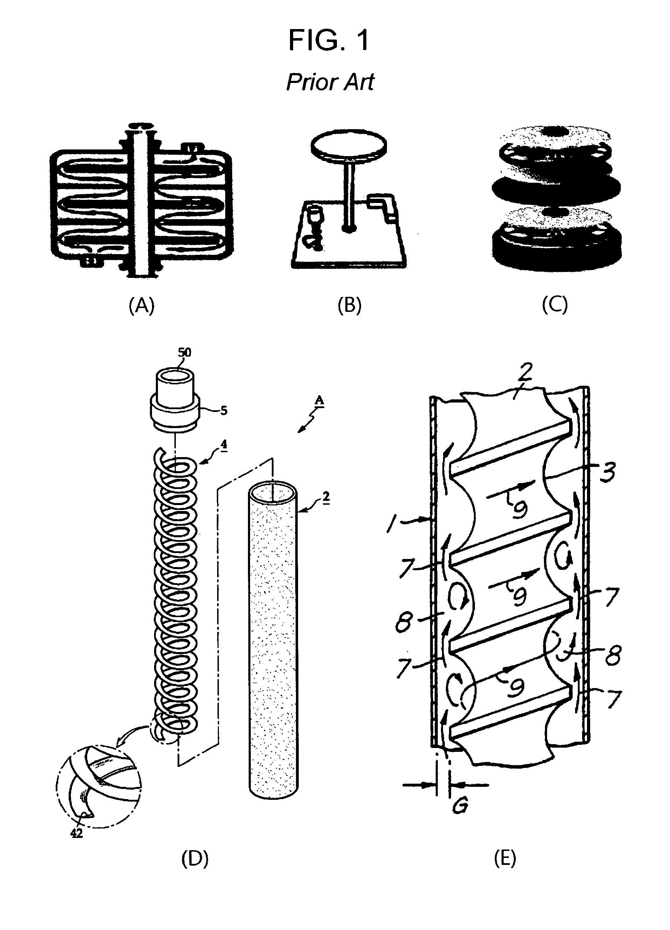

Various devices applying the clogging-prevention technology using swirl are shown in the drawings. FIG. 1 shows conventional devices that are mass-produced by applying the clogging-prevention technology utilizing swirl.

However, these devices also have various issues which have to be resolved. The device shown in FIG. 1(A) is the device developed by the DTRO Company in Germany. The device prevents membrane contamination by promoting turbulence using a protruded internal structure. It is high pressure structure and mainly used in sea water desalination. However, the device in FIG. 1(A) has incomplete turbulence forming capability and it is not proper to be used in high-concentration environment.

A device shown in FIG. 1(B) is developed by the VSEP Company in United States. The device prevents membrane contamination by shear wave directly created by mechanical vibration. The device in FIG. 1(B) has excellent contamination prevention capability but has an issue of frequent mechanical troubles since durability is decreased by the fatigue impact on the structure due to vibration. Substantial energy is wasted due to use of separate driving power.

A device in FIG. 1(C) is developed in Korea. It generates rotating swirl by a rotor that does not have contact with the membrane. The device creates powerful kinetic energy effect on the membrane surface using smaller energy. The device in FIG. 1(C) has an advantage that it has excellent membrane contamination-prevention capability through powerful swirl. However, the manufacturing cost is high because of its complicated structure. Therefore, it is difficult to be extensively used in actual fields unless the manufacturing cost decreases.

FIG. 1(D) and FIG. 1(E) show KR Patent No. 0916940 ("Filtration device equipped with spiral support device", 2009.09.04) and US Patent No. 5628909 ("Membrane filters with corkscrew vortex generating means", 1997.05.13). The above-mentioned devices generate swirl by inserting a column with spiral-type groove or structure in which flat irons are twisted in spiral-shape in the circular pipes. These devices generates swirl by inserting a fixed-shape structure in the circular pipes. They have advantages of low manufacturing cost in application to the fields but have a limitation that swirl is not sufficiently generated. In addition, there is an operation inconvenience that the devices need to be disassembled for washing and replacement since the fixed-shape structure is adopted.

As described above, there are various issues in the actual application of existing membrane clogging-prevention technologies utilizing swirl and many studies and developments have been progressed to resolve these issues.

[Cited Documents]

[Patent Documents]

(Patent Document 1) Korean Patent No. 10-0916940: FILTER FOR WATER, Registration Date: 2009/09/04
(Patent Document 2) US Patent No. 5628909: Membrane filters with corkscrew vortex generating means, Registration Date: 1997/05/13

[Non-patent Documents]

(Non-patent Document 1) Kang, T. G. and Kwon, T. H., 2004, "Colored particle tracking method for mixing analysis of chaotic micromixers," J. Micromech. Microeng. Vol. 14, pp.891-899
(Non-patent Document 2) A.D. Stroock et al., Science, 2002, 295:647-51, T.G. Kang and T.H. Kwon, J Micromech Microeng, 2004, 14:891-99, T.G. Kang et al., Microfluid Nanofluid, 2008, 4:589-99

SUMMARY

An embodiment of the present invention is to provide a filtering apparatus for saving energy as well as sufficiently washing a separation membrane in an environment of high concentration by efficiently generating chaos flow by using a structure of a fixed type.

In one general aspect, a filtering apparatus 100, including: at least one flowing portion 110, which original water is brought into and flows in; a separation membrane 120 provided on wall surface of the flowing portion 110 to be supported and passing and filtering the original water brought in the flowing portion 110; an accommodating portion 130, which accommodates the flowing portion 110 inside and which the filtered water formed filtering the original water by the separation membrane 120 flows in and is discharged from, wherein a chaos flow inducing portion 140 for generating chaos flow is arrayed to be fixed inside the flowing portion 110, and a plurality of separable chaos flow induction unit bodies 145 are arrayed in serial in a main flow direction to form at least one line in the chaos flow inducing portion 140.

In the chaos flow inducing portion 140, when a serial array direction of the chaos flow induction unit bodies 145 is an extended direction, array angles of the chaos flow induction unit bodies 145 in the extended direction have at least one value. In the chaos flow inducing portion 140, when an array angle of a predetermined chaos flow induction unit body 145 is chosen as a reference, array angles of the chaos flow induction unit bodies 145 adjacent to the predetermined chaos flow induction unit body 145 are vertical to the array angle of the predetermined chaos flow induction unit body 145.

In the chaos flow inducing portion 140, the chaos flow induction unit bodies 145 are separately arrayed at more than one predetermined interval(s).

In the chaos flow inducing portion 140, more than two chaos flow induction unit bodies 145 are densely arrayed to make a set and each set of the chaos flow induction unit bodies 145 are separately arrayed at more than one predetermined interval(s).

The chaos flow inducing portion 140 further comprises a separation supporter 144 for separately fixing and supporting the chaos flow induction unit bodies 145.

The serial array direction of the chaos flow induction unit bodies 145 is an extended direction, the chaos flow induction unit bodies 145 includes a plane portion 141 formed in a direction, which is parallel to the extended direction, and at least one protruded portion 142 formed to be protruded from each of an upper surface and a lower surface of the plane portion 141.

In the chaos flow induction unit bodies 145, the protruded portions 142 are arrayed to form inclination angles of 0° to 90° to the extended direction. In the chaos flow induction unit bodies 145, the protruded portions 142 are arrayed to form inclination angles of 30° to 60° to the extended direction.

In the chaos flow induction unit bodies 145, the protruded portion 142 formed on the upper surface of the plane portion 141 has an inclination angle, which is different from that of the protruded portion 142 formed on the lower surface of the plane portion 141.

In the chaos flow induction unit bodies 145, the plane portion 141 and the protruded portion 142 are formed to be disassembled and assembled. In the chaos flow induction unit bodies 145, the number of the protruded portions 142 formed on the plane portion 141 varies.

According to the present invention, a filtering apparatus with a separation membrane used in a field of water treatment has an effect of sufficiently washing a separation membrane in an environment of high concentration by removing contaminant accumulated in the separation membrane by generation of swirl, thereby maximizing efficiency in filtering. In particular, the filtering apparatus of the present invention has an effect of efficiently generating chaos flow by designing and applying an optimal chaos flow inducing shape through flow analysis. Accordingly, there is an advantage that the filtering apparatus is flexibly used in an environment of high concentration.

Particularly, the filtering apparatus has an advantage that a desired chaos flow inducing portion may be installed without limitation by shapes or sizes of the filtering apparatus by forming arrangement of a plurality of chaos flow induction unit bodies where chaos flow inducing portions are formed to be detachable. Also, there is an advantage that an operation condition desired by a designer is easily realized by controlling occurrence of chaos flow through arrangement interval of the chaos flow induction unit bodies.

In addition, the filtering apparatus generates swirl through a fixed-type structure, which does not require external power differently from prior arts that require additional power for a driving device for rotation or generation of vibration. Accordingly, the filtering apparatus minimizes cost for operation since there is no energy consumption for driving. Also, the filtering apparatus has superior durability to the prior arts by solving problems such as damages or abrasion due to vibration occurring at the time of driving. Therefore, management of the driving portion such as replace of consumable supplies due to abrasion is not required and replacement life of the device due to deterioration extends, thereby minimizing resources such as manpower, time and cost for operation and making the filtering apparatus economical.

DETAILED DESCRIPTION OF EMBODIMENTS

FIG. 1 shows conventional devices for antipollution of a separation membrane.

FIG. 2 shows a low pressure drop (LPD) shape.

FIG. 3 shows cross-sectional views of a velocity field in flow by the LPD shape.

FIG. 4 shows a result of particle tracking analysis according to Reynolds number's change in an LPD-RL type.

FIG. 5 shows a result of particle tracking analysis according to Reynolds number's change in an LPD-RR type.

FIG. 6 shows an isobaric surface when Re=10000 in the LPD shape.

FIG. 7 shows an impeller shape.

FIG. 8 shows a particle tracking analysis result according to Reynolds number's change in an impeller shape.

FIG. 9 shows a flat panel shape with an inclined groove.

FIG. 10 shows two counter-rotating flows with two different directions in rotation, which occurs due to the inclined groove carved on a flat panel surface in the flat panel shape with the inclined groove.

FIG. 11 shows a cross section velocity field shape in a flow by the flat panel shape with the inclined groove.

FIG. 12 shows a particle tracking analysis result according to Reynolds number's change in the flat panel shape with the inclined groove.

FIG. 13 shows definition on a design factor of the flat panel shape with the inclined groove.

FIGS. 14 to 17 show an analysis result on a flow field cross section according to change of each design factors (UD, t, d/D, Re) in the flat panel shape with the inclined groove.

FIG. 18 shows a particle tracking analysis result in positions of an inlet and an outlet in the flat panel shape with the inclined groove.

FIG. 19 shows a particle tracking analysis result according to change of each shape parameter when a Reynolds number is 500 in the flat panel shape with the inclined groove.

FIG. 20 shows a particle tracking analysis result according to Reynolds number's change in the flat panel shape with the inclined groove.

FIG. 21 shows a pressure difference in the inlet and the outlet in an analysis region of the flat panel shape with the inclined groove.

FIG. 22 shows a pressure change along a z-axis according to the Reynolds number and t in the flat panel shape with the inclined groove.

FIGS. 23 to 26 are conceptual views showing a filtering apparatus according to an exemplary embodiment.

FIGS. 27 to 29 show a chaos flow inducing portion having the flat panel shape with the inclined groove as a basic shape according to first to third exemplary embodiments.

FIGS. 30 to 32 show a test result on flux, consumption power, and loss of head according to the number of unit bodies.

FIG. 33 shows a chaos-flow inducer according to an optimal exemplary embodiment.

FIGS. 34 and 36 show a performance evaluation test result of a chaos flow induction unit body according to an optimal exemplary embodiment.

[Detailed Description of Main Elements]

| | | | |
|---|---|---|---|
| 100: | filtering apparatus | 110: | flowing portion |
| 120: | separation membrane | 130: | accommodating portion |
| 140: | chaos-flow inducer | 141: | plane portion |
| 142: | protruded portion | 143: | groove |
| 144: | separation supporter | | |
| 145: | chaos flow induction unit body | | |

Hereinafter, the filtering apparatus according to the present invention having a configuration as described above will be described in detail with reference to accompanying drawings.

As described above, it is very important to overcome the problem that performance of the separation membrane is limited when a separation membrane is blocked by the lamination of solid particles, which are filtered by the separation membrane, near a wall surface in a device for bringing original water in, filtering the original water, and discharging filtered water. In order to solve the problem, diverse technologies for removing the particles accumulated in the separation membrane have been suggested. However, the technologies including a method for directly applying vibration to a separation membrane, and a method for washing away solid particles by fast-flowing water by generating swirl using an dynamic structure operating with additional power (see FIG. 1(A), (B), (C)) have problems that energy is additionally consumed, that there is a problem in durability since fatigue impact may occur on the filtering apparatus itself due to vibration, and that there is a difficulty in field application since it is not easy to manufacture the structure or the device due to a lot of components, which causes raise of a cost for manufacturing. In the case of the method for removing solid particles by generating swirl using a fixed structure (see FIG. 1(D), (E)), there are advantages such as easy and cheap manufacturing but performance in removing particles is not good since swirl is not sufficiently generated.

In order to overcome the problems in the prior arts, the present invention suggests the filtering apparatus that performance in removing particles is remarkably improved by generating stronger chaos flow than the prior part when swirl is generated in original water with a fixed structure. Through diverse researches, it becomes a well-known fact that a mixing effect is rapidly increased by introducing chaotic advection. A lot of cases and researches for applying the chaotic advection to a fluid mixer have been actively presented or progressed. The present invention intents to design an optimal shape of a chaos-flow inducer by applying a numerical analysis technique to flow analysis of a chaotic mixer (Reference: Kang, T. G. and Kwon, T. H., 2004, "Colored particle tracking method for mixing analysis of chaotic micromixers," J. Micromech. Microeng. Vol. 14, pp.891-899).

The present invention assumes that any unit shape is formed to be periodically repeated in a shape of an inducer generating such a chaos flow. For example, a unit shape is formed to be periodically repeated in a shape of a conventional swirl generator shown in FIG. 1(D), (E). A velocity field may be efficiently computed by reducing a size of a flow device based on periodicity of the shape itself in the flow device with the above-mentioned form. In this case, a boundary condition and an incompressible normal state Navier-Stokes equation for obtaining a velocity field are represented by Equation 1 below. A condition such as following Equation 2 as a boundary condition for satisfying periodicity of the velocity field is introduced.

$$\rho\left(\mathbf{u}\cdot\nabla\mathbf{u}\right)+\nabla p-\nabla\cdot\left(2\mu\mathbf{D}\right)=0 \qquad \text{in }\Omega$$
$$\nabla\cdot\mathbf{u}=0 \qquad \text{in }\Omega$$
$$\mathbf{u}=0 \qquad \text{on }\Gamma_w$$
$$\mathbf{t}=-\Delta p\mathbf{n}+2\mu\mathbf{D}\cdot\mathbf{n} \qquad \text{on }\Gamma_{in}$$
$$\mathbf{t}=2\mu\mathbf{D}\cdot\mathbf{n} \qquad \text{on }\Gamma_{out}$$

Eq. 1

$$\mathbf{u}_i=\mathbf{u}_o \quad \text{on }\Gamma_i \text{ and } \Gamma_o$$

Eq.          2

wherein the vector value is shown in bold type, and marks generally used in the Navier-Stokes equation including $\mathbf{u}$ of velocity, $\rho$ of density, $\mu$ of viscosity, and $p$ of pressure are adopted herein. In addition, $\Omega$ represents an entire cross-sectional area; $\Gamma$ represents a circumference; w, in, and out respectively represent a wall surface, an inlet, and an outlet. That is, lines 1 and 2 of Equation 1 show equations for obtaining a velocity in the entire cross-sectional area. Line 3 of Equation 1 shows a condition that a velocity becomes 0 in a wall surface. Lines 4 and 5 of Equation 1 show a condition such as a pressure difference between the inlet and the outlet. Equation 2 shows the same velocity condition in the inlet and the outlet. As it is well known, since the Navier-Stokes equation is one of representative non-linear equations, a linearized solution is not obtained through the Navier-Stokes equation. Flow is generally analyzed based on a numeral analysis technique. In the present invention, a velocity field is obtained by using an analysis code based on a finite element method.

A mixing phenomenon is examined in a kinematical viewpoint of fluid particles without respect to spread of the fluid particles. In the particle tracking process, particles having different colors according to the type of fluids are tracked based on the velocity field, which is computed from the inlet to the outlet of the micro-mixer. A color given to each particle as information showing the type of fluid plays a key role in visualizing a mixing phenomenon together with position information of the particle. Equation 3 needs to be solved to track the position of the particle.

Eq. 3     $$\frac{d\mathbf{x}}{dt}=\mathbf{u}$$

In Equation 3, $\mathbf{x}$ and $\mathbf{u}$ represent a position of particles and a velocity vector. A modified equation such as Equation 4 may be quickly solved in comparison with Equation 3. Also, it is easy to represent dynamical systems of z direction.

$$\frac{dx}{dz}=\frac{u}{w}=\tilde{u} \qquad \frac{dy}{dz}=\frac{v}{w}=\tilde{v}$$

Eq. 4

Information on a velocity at a position of a particle is required for integral calculus of Equation 4. To achieve this, it is required to find an element included in the position of a particle and compute a velocity of a particle through an interpolation process based on a velocity at a node of the element. In the process of performing the present invention, a particle is moved to a new position based on a quaternary Runge-Kutta method (RK4) in integral calculus of Equation 4. This process is repeated until all particles arrive at the outlet of the mixer.

Meanwhile, since the present invention adopts distribution of particles to qualitatively visualize a chaotic motion of particles, uniformity of distribution of particles may be used as a criterion of quantification. One of quantitative evaluation indexes for performing the above-mentioned function is information entropy. Equation 5 is a mixing entropy, which is newly defined based on the information entropy.

$$S = -\sum_{r=1}^{N_r}\left[ w_r \sum_{k=1}^{N_i}\left( n_{i,k} \log n_{i,k}\right)\right]$$

Eq. 5

Increase of the mixing entropy is used to evaluate the degree of actual dispersion of particles. As shown in Equation 6, a value obtained by dividing entropy increase at a predetermined position by maximum entropy increase is defined as a degree of mixing $\kappa$.

$$\kappa = \frac{S - S_0}{S_{max} - S_0}$$

Eq. 6

In Equation 6, S, $S_{max}$ and $S_0$ respectively represent a mixing entropy in a predetermined cross section, a maximum entropy at an ideal mixing state, and entropy computed from initial particle distribution of the inlet. In case of globally chaotic flow, a value of k is 1. Otherwise, the value of k is 0.

When a particle trace is chaotic, particles flow while moving all positions on the cross section of the round pipe according to a theory. Accordingly, a problem that the separation membrane is blocked by the particles is minimized. Also, since it is possible to move particles near the wall surface of the separation membrane to an inner region of the pipe, it is expected that blocking is prevented and performance of the separation membrane is maximized. That is, performance for removing particles laminated on the separation membrane is remarkably improved in comparison with the conventional swirl generating inducer.

The present invention intents to suggest an optimal shape of a 3-dimensional structure that efficiently generates powerful chaos flow based on theoretical background as described above. Also, an actual trace of the particles is visualized while tracking particles based on the flow analysis result. The degree of chaos of flow generated by the shape of the chaos-flow inducer is evaluated by the mixing entropy (Equation 6) computed based on the particle tracking result.

It is estimated that Reynolds number (Re) of flow inside the separation membrane device ranges from 10 to 10,000 at a real driving condition. When fluid components escape through the separation membrane in a state that initial viscosity is low, a volumetric ratio of particles increases and viscosity of working fluids rapidly increases, to cause rapid decrease of the Reynolds number at the rear portion of the separation membrane device. Accordingly, it is expected that the laminar flow region changes and the above-mentioned range of the Reynolds number (Re) is derived from the expectation. Finally selected design of the chaos-flow inducer needs to be designed to secure the motion of the chaotic particles in diverse Reynolds number regions.

Flows of several designs are analyzed to determine a final chaos-flow inducer shape. Structures used in the analysis include (i) LPD shape, (ii) impeller shape, and (iii) flat panel shape with an inclined groove. Characteristics of flows generated in each structure will be introduced.

**(i) LPD shape**

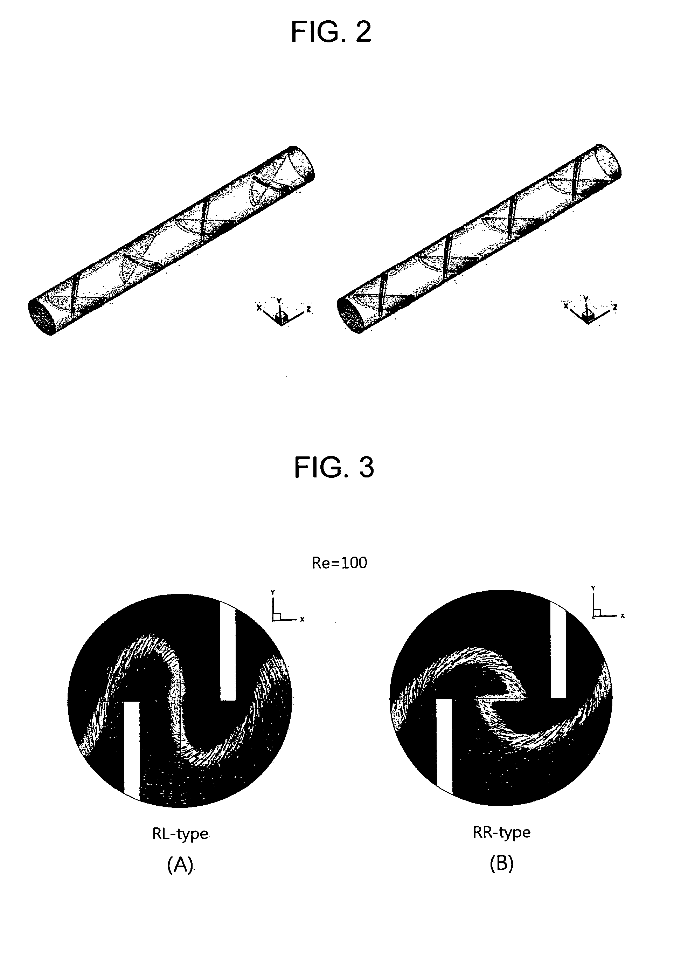

FIG. 2 shows a design shape of a chaos-flow inducer utilizing a structure of a low pressure drop (LPD) shape, i.e., a LPD mixer. As shown in FIG. 2, the LPD shape indicate a shape that two structures of a semielliptic shape are inserted to be orthogonally overlapped inside the round pipe. The LPD mixer is widely used in diverse fields nowadays. When a 3-dimensional helical velocity field is induced in each cross section, the LPD mixer is classified into an RL shape that a rotation direction of flow periodically changes according to the shape of the swirl inducer and an RR shape having a regular rotation direction.

The Reynolds number (Re) to the separation membrane device with the round pipe shape is defined as follows:

$$\text{Reynolds number, } Re = \frac{\rho D U}{\mu}$$

$\rho$: density [$kg/m^3$]

$\mu$: viscosity [$Pa \cdot sec$]

$D$: diameter of the pipe [$m$]

$U = Q/A$: average velocity [$m/sec$]

$Q$: flow rate [$m^3/sec$]

$A$: cross sectional area of the pipe [$m$]

FIG. 3 shows cross-sectional views of a velocity field in flow by the LPD shape. That is, FIG. 3 shows how a velocity component rotating in a cross section of a pipe by two pairs of 3-dimensional structures of a semielliptic shape, which are installed on a round pipe is generated. As confirmed in FIG. 3, it is known through flow analysis that the fluid rotates in both of two cases and two intersecting semielliptic plates makes a fluid rotate vertically to an axial direction of a pipe.

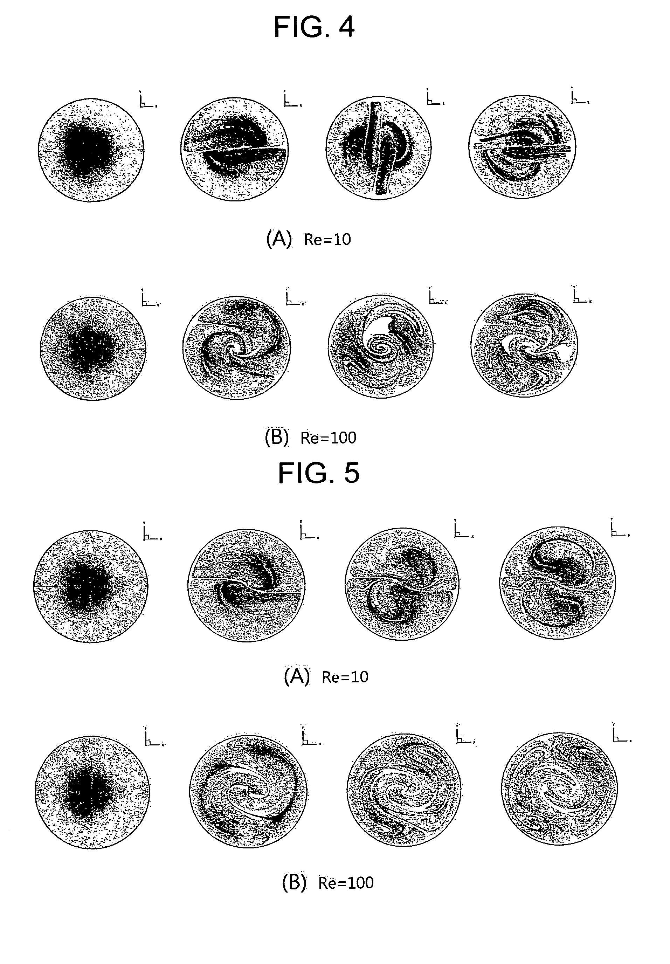

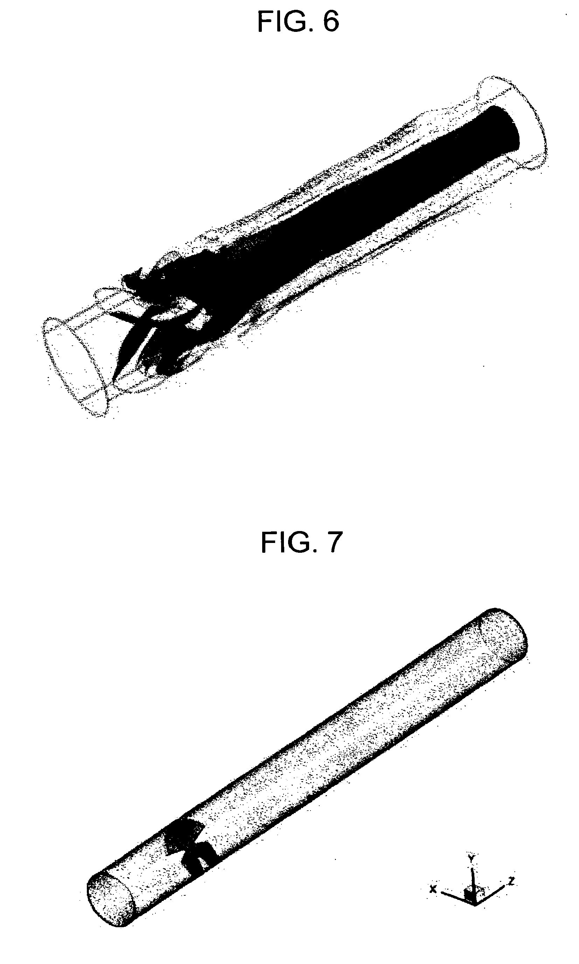

FIG. 4 shows a particle tracking analysis result according to Reynolds number's change in an LPD-RL type. FIG. 5 shows a particle tracking analysis result according to Reynolds number's change in an LPD-RR type. That is, FIGS. 4 and 5 show a particle trace in each cross section when fluid particles are introduced to an inlet of a separation membrane device by using a velocity field, which is obtained by numeral analysis. It is known with reference to FIG. 4 and FIG. 5 that as the Reynolds number increases, a chaotic flow tendency grows stronger and a complicated motion trace of particles is generated by chaotic advection. Also, mixing enhancing performance of the RL-type is excellent in a region that the Reynolds number is small. However, it is confirmed through the numeral analysis that a stronger rotation flow component is shown in the RR-type in a region that the Reynolds number is 100 or more and the mixing performance is enhanced. That is, a separation membrane device adopting both the RL-type and the RR-type may be used in case of the above-mentioned shape. It is expected that contamination of the separation membrane is minimized and performance is maximized through uniform mixing in diverse Reynolds number regions. When a velocity is fast (Re=10000 or more) in the LPD shape, a low pressure region is created locally around the semielliptic structure. When the pressure is lower than saturate vapor pressure, cavitation may be generated. FIG. 6 shows an isobaric surface in case that Re=10000. It is known that a low pressure region locally exists in a swirl inducer surface.

**(ii) Impeller shape**

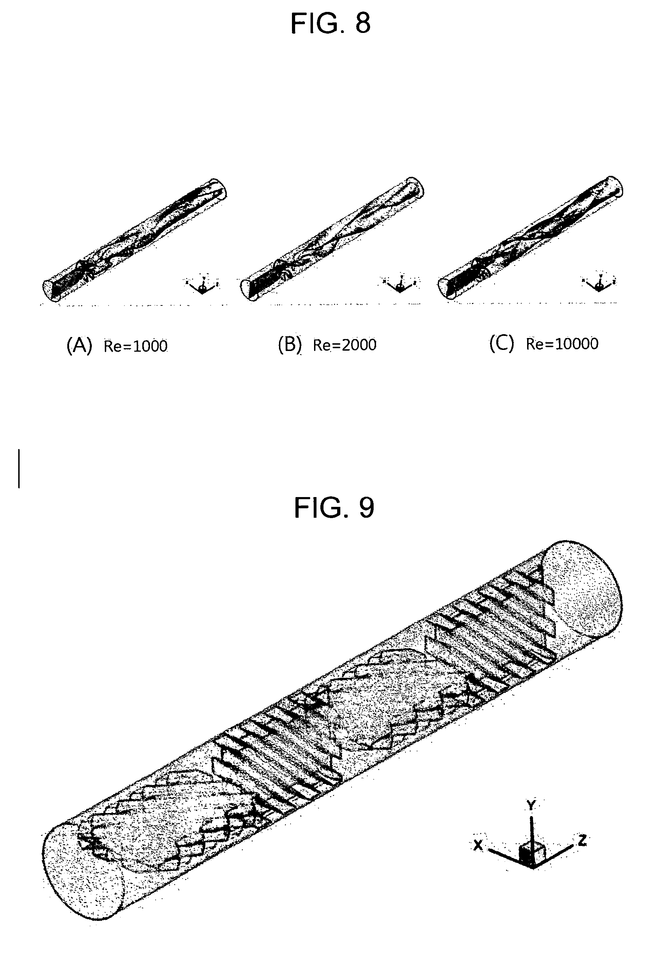

FIG. 7 shows an impeller shape. As shown in FIG. 7, swirl is generated in a process that a rotation motion is generated while injected fluid goes through a fixed impeller, and the generated swirl is transferred to the lower portion of the pipe due to inertia. Based on the shape of FIG. 7, a particle tracking analysis result is computed in the same manner as described above. FIG. 8 shows the computed particle traces in a flow of a swirl inducer in a fixed impeller shape. As shown in FIG. 8, the fluid particle rotates with a complicated aspect after going through the impeller. In particular, it is confirmed in FIGS. 8(A) to 8(C) that as the Reynolds number increases, the number of fluid rotations per unit length increases in an axial direction of the pipe.

When velocity is fast in such a shape, a problem such as cavitation that air evaporates due to locally low pressure in an impeller surface may be generated. The evaporated gas has a problem of causing a structural problem to the impeller surface and generating damage in severe cases.

**(iii) Flat panel shape with inclined groove**

FIG. 9 shows a flat panel shape with an inclined groove. To be specific, the flat panel shape with the inclined groove is inserted into a round pipe and a pair of flat panels forming an angle of 90° to each other make one cycle. The inclined groove generates a double-helical flow. One cycle is formed of helical flows. Two helical flows show a characteristic that flow lines cross to each other when the two helical flows are projected on the same plane. When the shape of two intercrossing flows is cyclically repeated, the fluid particle shows a chaotic mixing characteristic.

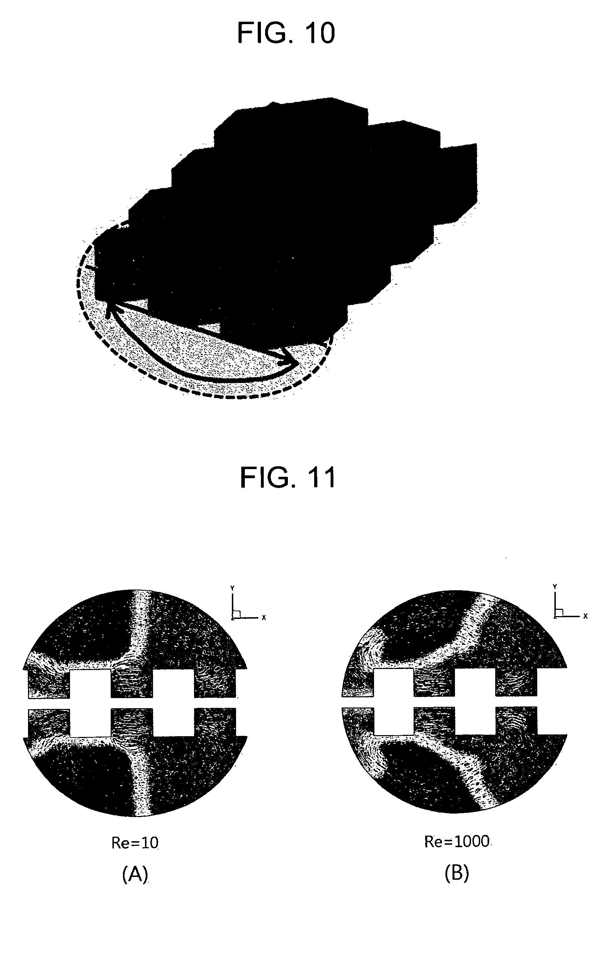

FIG. 10 shows a shape of two counter-rotating flows that rotation is generated in two opposite directions by the inclined groove carved on the surface of the flat panel. As shown in FIG. 10, a velocity component exists in a horizontal direction due to the inclined groove carved on the surface of the flat panel and a helical flow rotating in different directions of left/right or up/down in the flat panel is induced (see references: A.D. Stroock et al., Science, 2002, 295:647-51, T.G. Kang and T.H. Kwon, J Micromech Microeng, 2004, 14:891-99, T.G. Kang et al., Microfluid Nanofluid, 2008, 4:589-99)

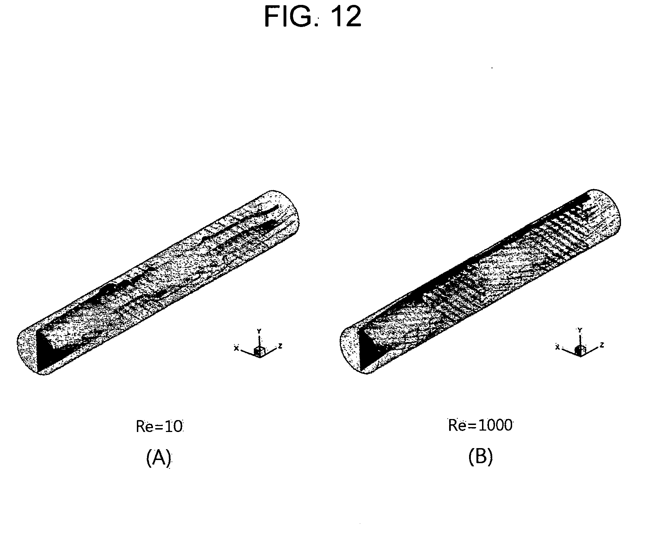

FIG. 11 shows a cross section velocity field shape in a flow by the flat panel shape with the inclined groove. FIGS. 11 (A) and (B) respectively show results of the cases that the Reynolds number is 10 and 1000. As shown in FIG. 11 (A), when the Reynolds number is 10, a flow rotating in a cross section exists but there is a tendency that the flow is narrowly generated in a region near the groove. On the other hand, it is confirmed in FIG. 11 (B) that when the Reynolds number is increased by 1000, a larger swirl is generated. A position of fluid particles is tracked by using a velocity field, which is obtained as shown in FIG. 11, in order to check which motion trace the fluid particle arrayed in a vertical direction in the inlet shows while going through the swirl inducer. FIG. 12 shows the position of fluid particles tracked as above.

As expected through the characteristic of the velocity field, distribution of the particles is more uniform in the outlet after two cycles in case of Re=1000, which shows stronger rotation. It is indirectly checked that if there exists sufficient strength of the rotation flow induced by the flat panel with the inclined groove, chaotic advection may be generated.

Based on the flow characteristic described above and the particle tracking result, (iii) shape shown in FIG. 10 to FIG. 12, i.e., a separation membrane filtering apparatus, in which the chaotic advection is realized in the wide Reynolds number region when the flat panel shape with the inclined groove is optimized, may be manufactured. A factor affecting the degree of chaos of the flow system is as follows:

■ Number of grooves in a cycle
■ Direction of two counter-rotating flows
■ Ratio of width of groove to a diameter of a circle
■ Ratio of a gap between cycles

The present invention intends to suggest an optimal shape by systematically analyzing the effect that the design factors affect the flow generated by the flat panel shape with the inclined groove.

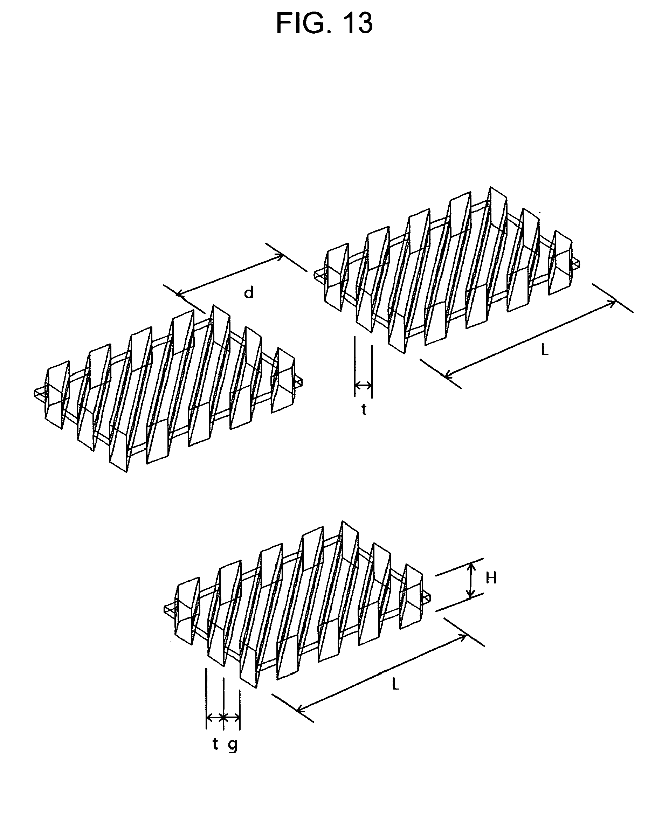

In order to examine the flow tendency according to shape change of the chaos-flow inducer, the design factor is set as a length(L) of the inducer, a gap(d) between the inducers, and a thickness(t) of the groove. FIG. 13 shows that the design factor of the flat panel shape with the inclined groove is more specifically defined. Hereinafter, D represents a diameter of a round pipe receiving the inducer.

For actual computing, analysis is executed based on a commercial program COMSOL to grasp the flow tendency according to change of the design factor. A model for analysis has a pipe diameter(D) of 20mm, and a width of the inducer is fixed to be the same as the diameter of the pipe. The depth of the groove is 2.5mm and a height of the inducer including the groove is 6mm. The groove forms 45° with a z-axis and a gap between the grooves is fixed to be 2.5mm. As shown in Table below, analysis is executed by changing the design factor and the Reynolds number. Since the flow pattern shows periodicity, only two-cycles are analyzed for the sake of convenience.

| Length of Inducer, L | Gap of Inducer, d | Thickness of Groove, t | Reynolds number, Re |
| --- | --- | --- | --- |
| 1.5D | 0.5D | 1mm | 100 |
| 3D | D | 2.5mm | 500 |
| 4.5D | | | 1,000 |
| | | | 5,000 |

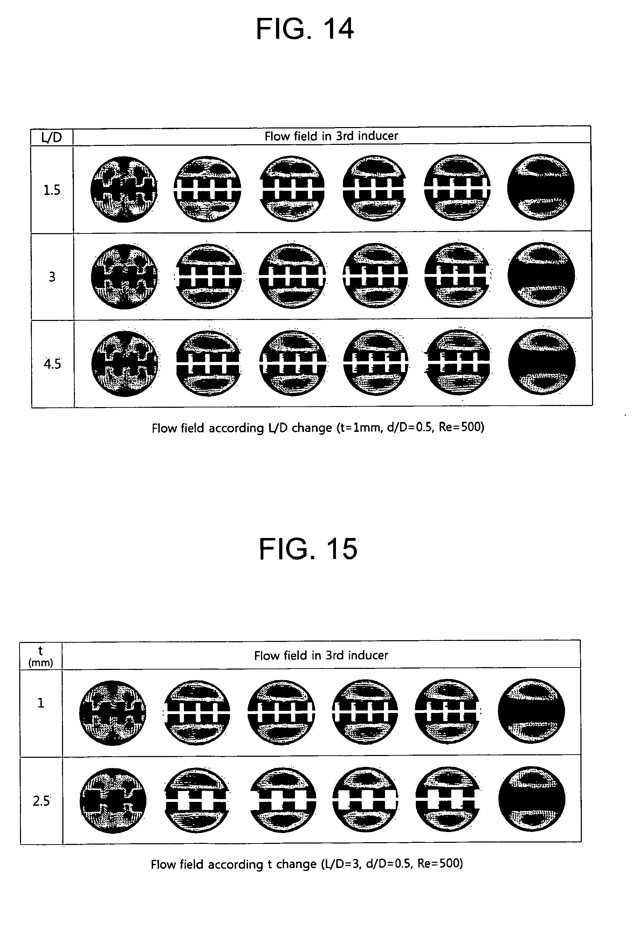

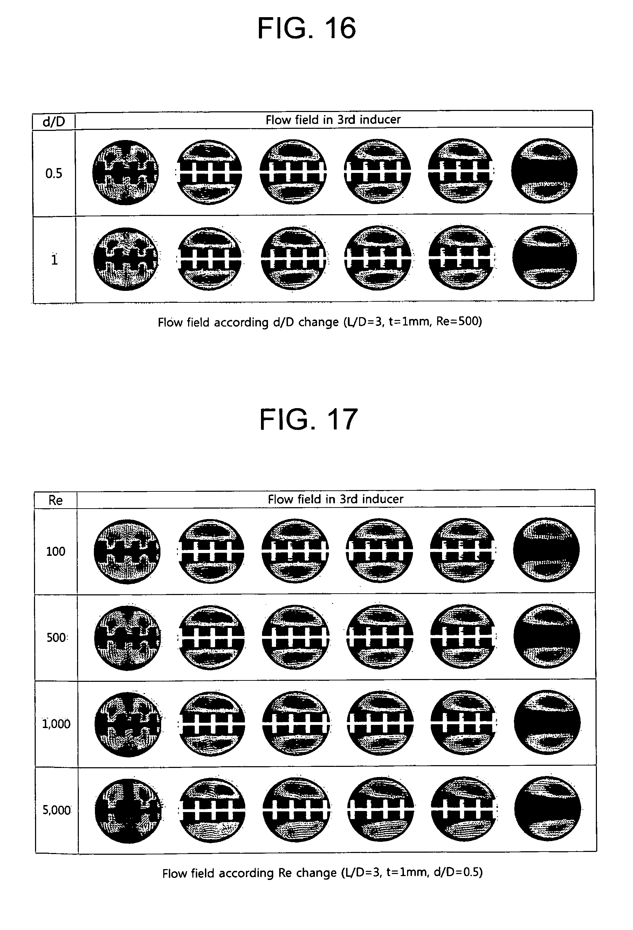

In order to grasp the flow tendency, the flow field of 6 cross sections will be examined in equal intervals in the 3rd inducer. FIG. 14 to FIG. 17 show flow field cross section analysis results according to change of each design factor. To be specific, FIG. 14 shows a flow field according to UD change, and FIG. 15 shows a flow field according to t change. Also, FIG. 16 shows a flow field according to d/D change and FIG. 17 shows a flow field according to Re change.

When the UD effect is first examined with reference to FIG. 14, there is a tendency that when the UD is large, the chaos flow is well generated. It is because a radius of rotation becomes larger since the larger the UD is, the more the components of the reverse rotation direction of the flows decrease. When velocity fields according to t change are compared with reference to FIG. 15, there is a tendency that the chaos flow is well generated in case of t=1 mm in comparison with the case of t=2.5mm. It is because the area of the inclined groove inducing the rotation flow increases according to thinning of t. FIG. 16 shows that a difference between the flow fields according to d change is slight. Accordingly, it is considered that d is a parameter having little effect on the generation of the chaos flow. It is determined with reference to FIG. 17 that the Reynolds number helps the generation of the chaos flow since velocity becomes faster in the large Reynolds number.

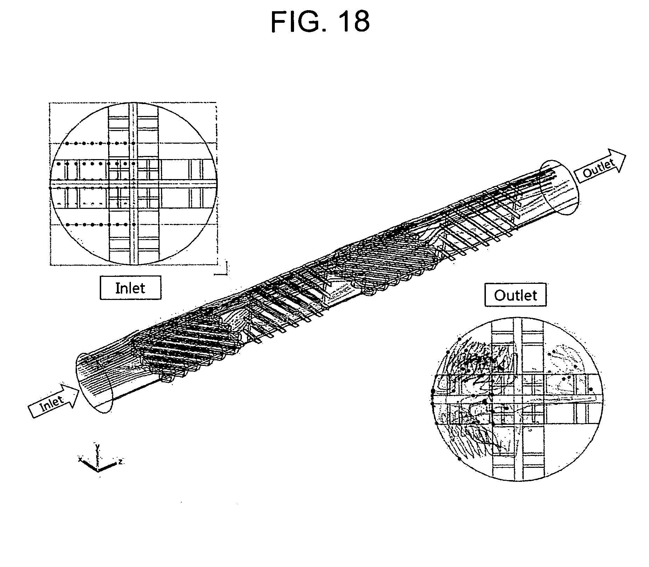

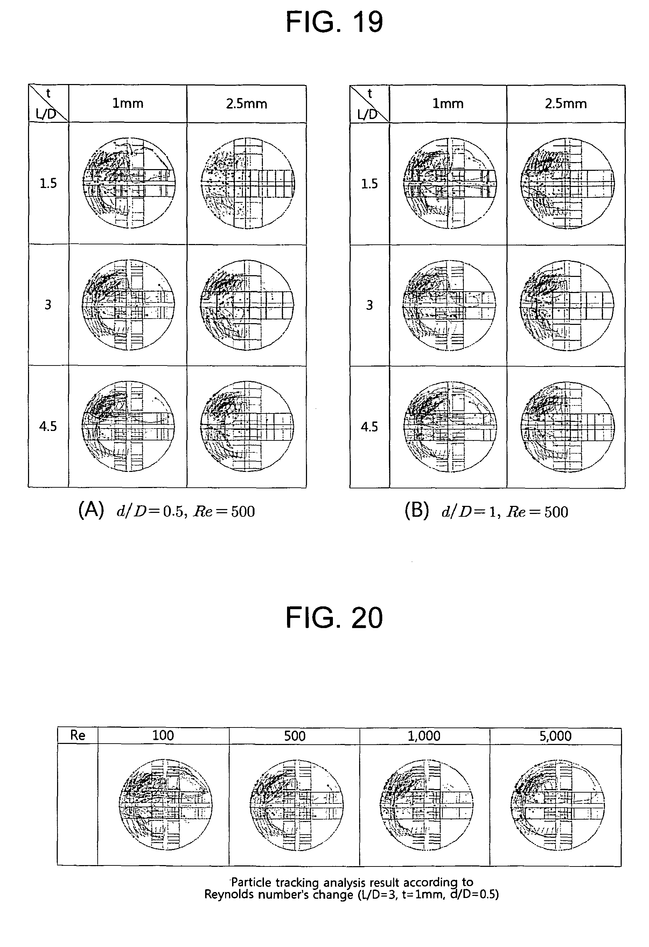

Chaos flow effect after going through 2 cycles will be examined through particle tracking. As shown in FIG. 18, a particle trace is examined in an outlet by setting up the position of the particle in an inlet. The particle position in the outlet is marked by a dot and a route of particles is marked by a line. FIG. 19 shows a result according to parameter change of each shape when the Reynolds number is 500. The result of FIG. 19 shows a similar tendency to the result shown in FIG. 14 to FIG. 17, i.e., the result inferred from the flow field. That is, it is confirmed in case of t=1 mm that the larger the UD is, the larger the gap between the position of the outlet particle and the initial position becomes. The movement in the rotation direction, which is shown in the flow field, appears in the particle track and the particle track is generally long. It confirms that the rotation flow of the fluid particle is well generated in the larger UD in case of t=1 mm. However, with reference to the particle track of d/D, there is a difference in the particle track of each case but their difference is too slight to explain the general tendency. Looking into the particle tracking according to the Reynolds number with reference to FIG. 20, the fluid particle greatly moves in the rotation direction and a radius of rotation is longer when the Reynolds number is large. As confirmed through the velocity field, increase of inertial force, i.e., increase of velocity, appears as increase of the velocity component of the cross section direction according to increase of the velocity radius direction component flowing through the inclined groove.

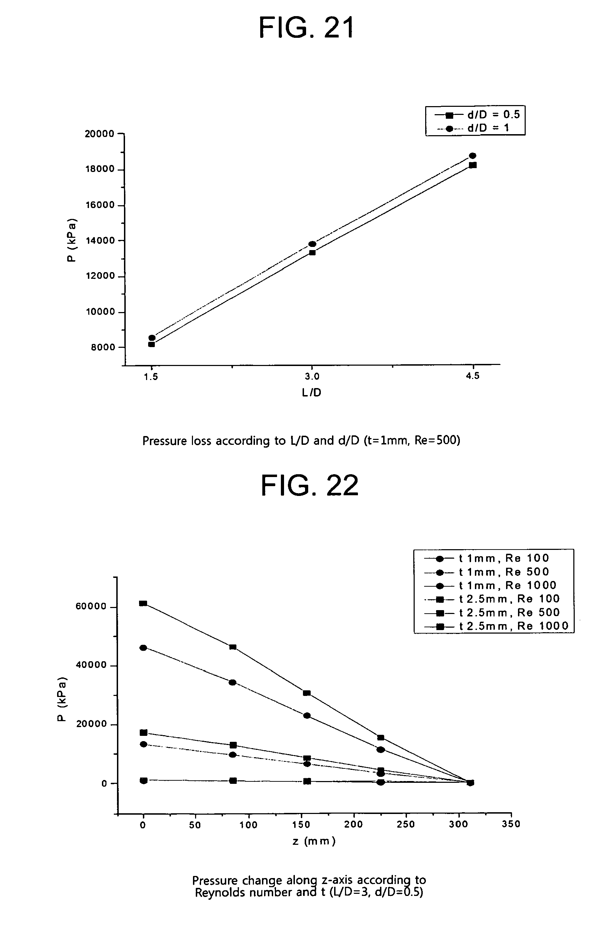

Finally, pressure loss inside the pipe by insertion of the inducer will be examined. Above all, effect of UD and d/D will be examined. FIG. 21 shows a pressure difference in the inlet and the outlet in an analysis region. In FIG. 21, t=1 mm, and Re=500. UD is marked on an x-axis. The larger the UD is, the more the pressure loss increases. The UD is a ratio of a pipe diameter to an inducer length. As the value increase, the length of the inducer becomes longer. As the length of the inducer becomes longer, the pressure loss increase. On the other hand, d/D is a ratio of a pipe diameter to a gap between inducers. As the value increase, the gap of the inducer becomes larger. As the gap of the inducer becomes larger, the length of the pipe becomes larger to cause increase of the pressure loss.

FIG. 22 shows a pressure change in a z-axis according to Reynolds number and t in a flat panel shape with an inclined groove. In FIG. 22, the effect of the Reynolds number and t is examined after fixing as UD=3, and d/D=0.5. The pressure loss by t in the same Reynolds number shows a smaller value in t=1 mm. As described the effect of t by the flow field above, it is confirmed that the pressure loss as well as the velocity loss shows a small value. It is apparent that the velocity loss of a z-axis component as a flowing direction affects the pressure loss. Regarding the pressure loss according to the Reynolds number in the same t, as the Reynolds number increases, the higher velocity is required to cause increase of the pressure loss since the Reynolds number is a function based on the velocity in case that the same fluid is used.

The analysis results described above are as follow:

■ As the UD becomes larger, a chaos flow is more easily generated but the pressure loss also increases.
■ In t=1 mm, the chaos flow is more easily generated and the pressure loss is also smaller than t=2.5mm.
■ It is difficult to generalize effect of d/D on generation of chaos flow and the pressure loss is smaller in d/D=0.5.
■ As the Reynolds number becomes larger, the chaos flow is more easily generated but the pressure loss also increases.
■ The factors directly affecting the rotation flow are a height(H) of an inducer structure and a width(g) of a fluid channel of the inducer.

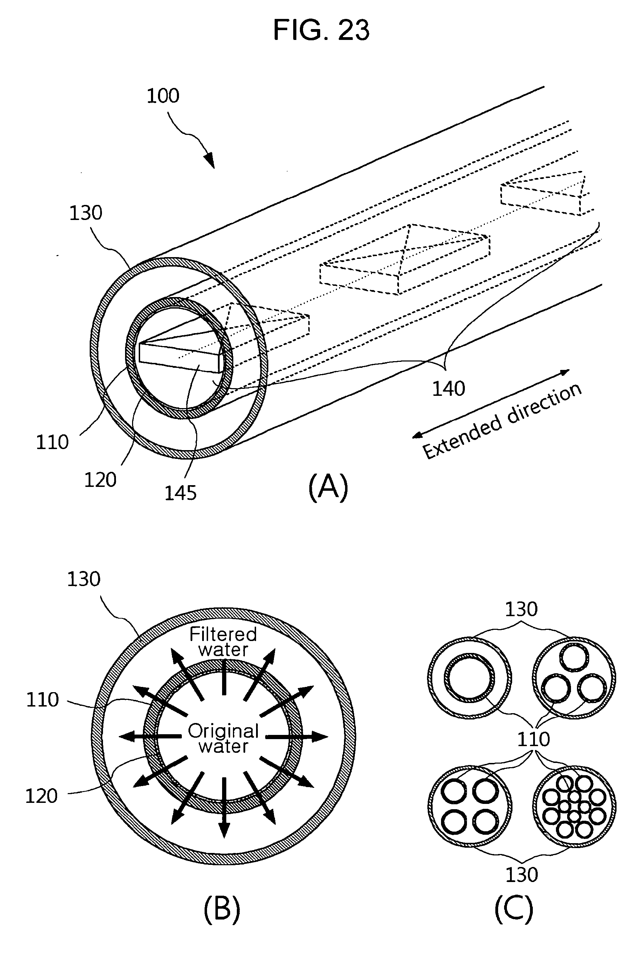

Hereinafter, a detailed configuration of a filtering apparatus 100 according to the present invention will be described. FIG. 23 is a conceptual view showing a basic configuration of the filtering apparatus. The filtering apparatus 100 includes a flowing portion 110, a separation membrane 120, and a accommodating portion 130 as a configuration for bringing original water in, filtering the original water using the separation membrane, and discharging the filtered water. The present invention also includes a chaos flow inducing portion 140, which is optimally designed based on the analysis described above. Each portion of the present invention will be described in detail hereinafter.

As described above, the filtering apparatus 100 includes the flowing portion 110, the separation membrane 120 and the accommodating portion 130. Original water is brought into and flows in the flowing portion 110. The flowing portion 110 is accommodated inside the accommodating portion 130. The separation membrane 120 is included to be supported on a wall surface of the flowing portion 110, and filters the original water brought in the flowing portion 110. That is, the original water passes the separation membrane 120 included on the wall surface of the flowing portion 110 and moves to a space between the flowing portion 110 and the accommodating portion 130. Through this process, the original water is changed into filtered water by being filtered in the separation membrane 120. Accordingly, the filtered water flows inside the accommodating portion 130 and is discharged by an individual discharging port included in the accommodating portion 130 to obtain finally filtered water. As a distinguishing element of the present invention, the chaos flow inducing portion 140 is fixed inside the flowing portion 110 and removes contaminant accumulated in the separation membrane 120 by generating chaos flow. The optimum design of the chaos flow inducing portion 140 will be described in detail hereinafter.

Under the condition that the filtering apparatus 100 has the configuration that the flowing portion 110 receives, stores and filters original water through the separation membrane 120 positioned on the wall surface, and that the flowing portion 110 is included inside the accommodating portion 130, the filtered water is stored and flows to be finally discharged, the filtering apparatus 100 may be configured without limitation. FIG. 23A and FIG. 23B show exemplary embodiments that the filtering apparatus 100 is realized in the simplest format. Since each of the flowing portion 110 and the accommodating portion 130 has a pipe shape, the filtering apparatus 100 has a double-pipe shape.

In thus configured filtering apparatus 100, the flowing portion 110 and the accommodating portion 130 may be coaxially arrayed in consideration of safety. FIG. 23C shows diverse exemplary embodiments that one or more flowing portion(s) 110 are included in the accommodating portion 130. As shown in FIG. 23C, a plurality of flowing portions 110 may be included inside the accommodating portion 130. When a plurality of flowing portions 110 are included inside the accommodating portion 130, the flowing portions 110 may be radially arrayed.

Since a configuration of the swirl generator 140 for washing the separation membrane 120 is more simplified than the prior art, there is not any specific limitation on the structural configuration. Accordingly, the filtering apparatus 100 may be realized in the very simple form as shown in FIG. 23 and it will be more specifically described hereinafter. When the filtering apparatus 100 is realized as shown in FIG. 23, the filtering apparatus 100 may be simply installed on a fluid channel of a water treatment device, thereby minimizing expenses for facilities and obtaining an economical effect.

The filtering apparatus 100 may secure diverse advantages that it is eco-friendly, that water purity is stably controlled with no regard to the type of contaminants, and that it is easily managed according to the realization of automated processes by obtaining filtered water by filtering original water through the separation membrane 120. When the separation membrane is washed by applying a 3G swirl generating technology to prevent accumulation of the contaminant filtered by the separation membrane, unnecessary motions or external power is not required differently from the conventional swirl generating devices. Particularly, the chaos flow inducing portion 140 for more effectively generating chaos flow in comparison with the conventional swirl generating device is provided.

Since the chaos flow inducing portion 140 generates swirl by its shape, external power is not required and there is no motion according to the generation of swirl due to the structure of the chaos flow inducing portion 140. Since the problems including external power and generation of motions are excluded in the chaos flow inducing portion 140, the filtering apparatus 100 is very efficient in view of saving of cost and energy for operation in comparison with the conventional devices. In addition, since the filtering apparatus 100 does not require diverse structures for operation using external power, the filtering apparatus 100 may be easily designed and manufactured. There is also an advantage that since there is little limitation on the configuration and the installation position according to the simplified structure, a range of application is rapidly expanded. In addition, since no motion is generated in the structure for generating swirl in the filtering apparatus 100, the problems including vibration generated by the motion of the components and deterioration of durability according to fatigue shock, which is generally generated by vibration, are excluded.

A shape of the chaos flow inducing portion 140 will be specifically described with reference to the above description as follows.

In the chaos flow inducing portion 140, a plurality of separable chaos flow induction unit bodies 145 are arrayed in series in a main flow direction to be formed in at least one line. It is well known that when unit bodies with the same shape inside the round pipe are cyclically arrayed in series, swirl is efficiently generated. Accordingly, the chaos flow induction unit bodies 145 may be formed to have the same shape. However, the chaos flow induction unit bodies 145 may have more than two different shape that are similar and symmetrical to each other, or have one shape in a section that high concentration of original water is contained and the other shape in a section that low concentration of original water is contained. That is, the chaos flow induction unit bodies 145 may have different shapes.

The feature that the chaos flow induction unit bodies 145 are formed to be separable and are arrayed in series is differentiated from that of the conventional swirl generating devices. As shown in FIG. 1D and 1E, the conventional swirl generating device is formed such that an integrally formed structure is inserted into a pipe but the present invention is formed such that they are separable. Accordingly, the present invention has many advantages in installation or operation.

For example, when the filtering apparatus 100 has a round pipe shape as shown in the drawing, it is apparent that the length of the pipe may be changed. However, since the conventional swirl generating device has the integrally formed swirl generating device, there is a disadvantage that the length of the swirl generating device needs to be manufactured according to the length of the pipe. The chaos flow inducing portion 140 of the present invention is very conveniently installed and manufactured since the length is fitted by assembling the required number of separable chaos flow induction unit bodies 145 according to the length of the pipe.

When the filtering apparatus 100 is operated for a long time, inner parts need to be replaced or washed. Since the chaos flow inducing portion 140 has a structure that the separable unit bodies are assembled, the chaos flow inducing portion 140 may be more easily replaced and washed and costs less than the integrally formed conventional swirl generating device. As a simple example, when the conventional swirl generating device is partially damaged, the integrally formed device needs to be entirely replaced. However, when the present invention is partially damaged, only the damaged unit body needs to be replaced. That is, the present invention is much superior to the conventional swirl generating device in consideration of convenience for user and cost.

When the filtering apparatus 100 has a shape of a linear pipe, there is no problem in applying the conventional swirl generating device. However, in particular cases such that the filtering apparatus 100 has a curved pipe shape, the conventional swirl generating device may have a problem in installation itself. As described above, since the chaos flow inducing portion 140 has the structure that the separable unit bodies are assembled, the chaos flow inducing portion 140 is less limited by the shape of the filtering apparatus 100 to be widely applied in the actual fields.

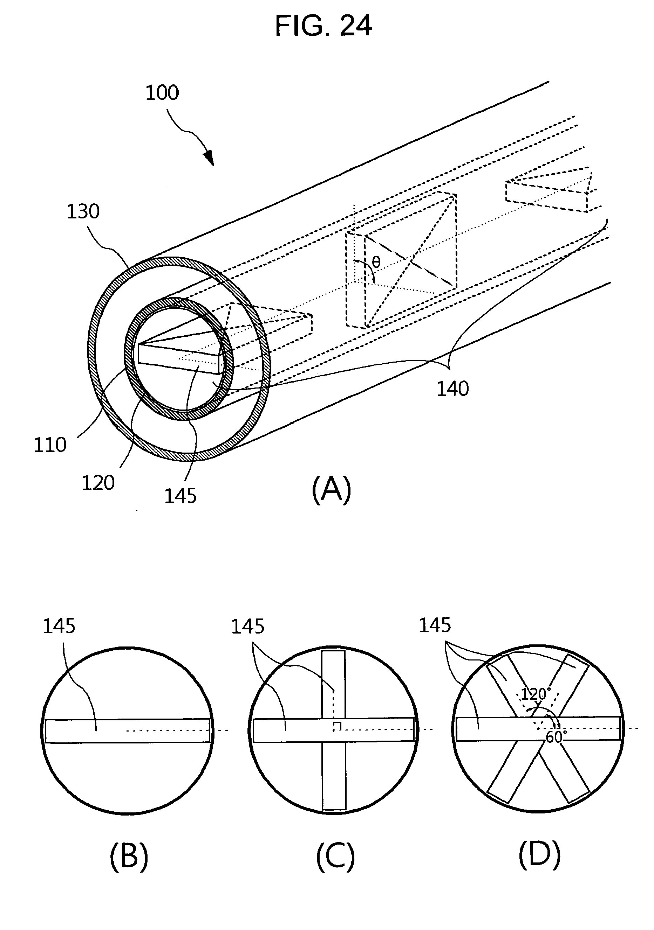

FIG. 23 does not show specific shapes of the chaos flow induction unit bodies 145. It means that the present invention is not limited by the optimized shape in the description hereinafter. That is, the chaos flow induction unit bodies 145 may be designed through an optimization process, which will be described hereafter based on the studies as described above. However, the present invention is not limited thereto and may be formed of any other shapes under the condition that chaos flow is efficiently generated. When a direction that the chaos flow induction unit bodies 145 are serially arrayed is an extended direction, the chaos flow inducing portion 140 is configured as shown in FIG. 24 such that the array angle of the chaos flow induction unit bodies 145 has at least one value in the extended direction. The array angle is marked in "8" in FIG. 24.

It will be described in detail as follows. If the array angle of the chaos flow induction unit bodies 145 has one value, it means that all chaos flow induction unit bodies 145 are arrayed side by side in the extended direction. That is, the array angle of the chaos flow induction unit bodies 145 shows a shape of FIG. 24B. FIG. 24(C) shows a case that the array angle of the chaos flow induction unit bodies 145 has two values. One value forms 0 ° and the other has 90° based on a reference line. FIG. 24(A) shows a 3-dimensional shape of FIG. 24(C). FIG. 24(D) shows a case that the array angle of the chaos flow induction unit bodies 145 has three values. Each of the array angles is 0°, 60° and 120°.

As described above, when the flat panel shape with the inclined groove is adopted as a basic shape, and a pair of flat panels forming an angle of 90° form one cycle, the inclined groove generates intercrossing double-helical flow. When the intercrossing two flow shapes are cyclically repeated, it is known that the fluid particles show a chaotic mixing characteristic. Accordingly, the array angle of the chaos flow induction unit body 145 adjacent to a predetermined chaos flow induction unit body 145 may be vertical to the array angle of the predetermined chaos flow induction unit bodies 145 in the chaos flow inducing portion 140 on the basis of the array angle of the predetermined chaos flow induction unit bodies 145. This array shape is shown in FIG. 24(A) and FIG. 24(C). The array shape is the most preferable embodiment with the premises that the chaos flow induction unit bodies 145 has the flat panel shape with the inclined groove as a basic shape. When the chaos flow induction unit bodies 145 are formed of other shapes, values of theoretically or experimentally better array angles may be chosen. The chaos flow induction unit bodies 145 are more concentrated, the chaos flow is well generated. In consideration of concentration of the introduced original water and a concentration change section, the chaos flow induction unit bodies 145 may be properly arrayed in diverse separation gaps. For example, if concentration of the original water to be filtered by the filtering apparatus is high, the separation gap is designed to be narrow. If the original water has high concentration in one section and low concentration in the other section, it is designed to have a narrow separation gap in the section of high concentration and a wide separation gap in the section of low concentration. That is, it is designed to have diverse widths of the separation gaps.

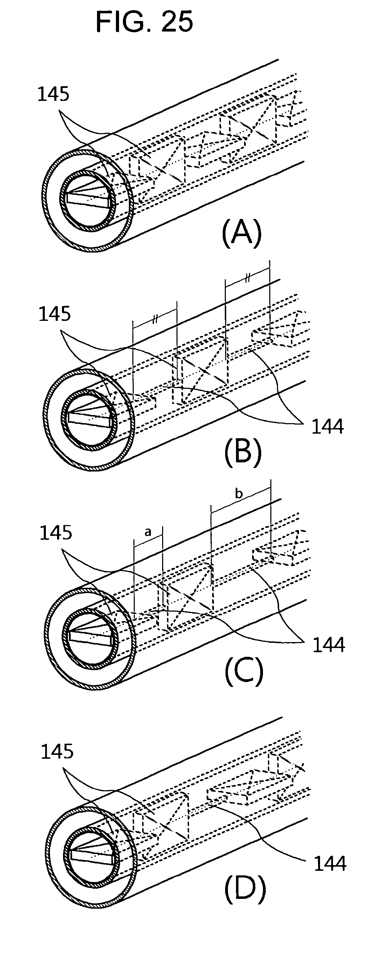

In the chaos flow inducing portion 140, the chaos flow induction unit bodies 145 are arrayed at one or more predetermined interval. It will be more specifically described as follows. For example, the chaos flow induction unit bodies 145 may have a shape that they are arrayed closely to each other as shown in FIG. 25(A). This case means that the chaos flow induction unit bodies 145 are separately arrayed at intervals with a single value 0. As shown in FIG. 25(B), the chaos flow induction unit bodies 145 may be separately arrayed at the same intervals with any single value. Also, as shown in FIG. 25(C), two chaos flow induction unit bodies 145 may make a pair. In each pair of chaos flow induction unit bodies 145, one pair of chaos flow induction unit bodies 145 have a gap of a and the other pair of chaos flow induction unit bodies 145 have a gap of b.

In the chaos flow inducing portion 140, at least two chaos flow induction unit bodies 145 are densely arrayed to form a set. Each set of the chaos flow induction unit bodies 145 may be separately arrayed at one or more predetermined interval(s). FIG. 25(D) shows a shape that each set is arrayed at the same intervals such that two chaos flow induction unit bodies 145 are densely arrayed to form a set and the chaos flow induction unit bodies 145 of one set are formed to be vertical to each other. In the shape shown in FIG. 25(D), a has a value 0 in the exemplary embodiment of FIG. 25 (C). The shape may be the most preferable exemplary embodiment.

To be specific, the shape may be the most preferable exemplary embodiment under the condition that the basic shape of the chaos flow induction unit bodies 145 is the flat panel shape with the inclined groove. When the chaos flow induction unit bodies 145 have other shapes, it is apparent that values of theoretically or experimentally better separation gap may be chosen.

In addition, when the chaos flow induction unit bodies 145 are separately arrayed, the chaos flow inducing portion 140 may further include a separation supporter 144 for separately fixing and supporting the chaos flow induction unit bodies 145. Since the separation supporter 144 only needs to fix and support the array by properly controlling the gap of the chaos flow induction unit bodies 145, the shape of the separation supporter 144 is not limited under the condition that the separation supporter 144 is disassembled from and assembled with the chaos flow induction unit bodies 145. Also, since the chaos flow induction unit bodies 145 are the structures affecting the fluid flow such as generating of a chaos flow, the separation supporter 144 may be formed not to affect the fluid flow.

When the basic shape of the chaos flow induction unit bodies 145 is the flat panel shape with the inclined groove, it is expected that the chaos flow may be sufficiently generated in a wide range of Reynolds number's. Also, since the flat panel shape with the inclined groove has a superior pressure characteristic to other shapes, cavitation may be excluded to improve durability and stability of the device as sufficiently described above. Accordingly, the present invention suggests the flat panel shape with the inclined groove as the basic shape of the chaos flow induction unit bodies 145 as shown in FIG. 13.

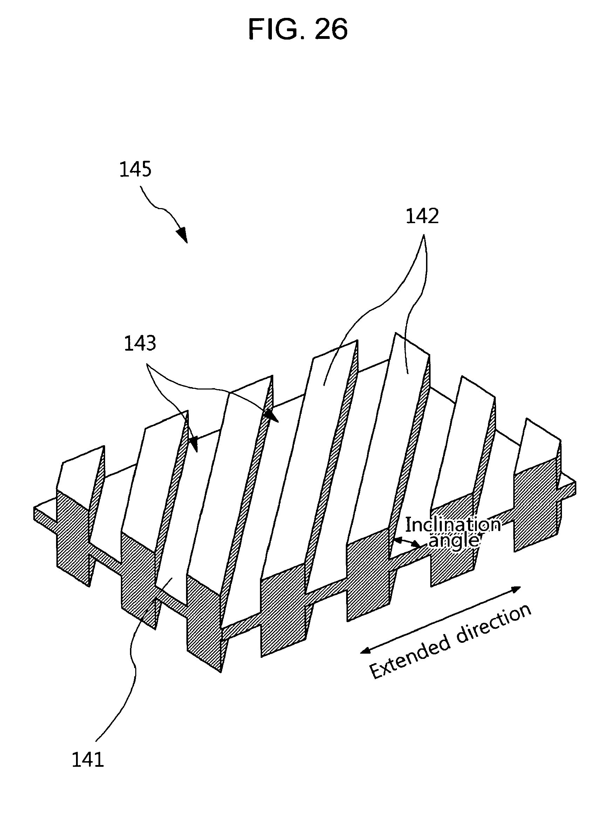

To be specific, as shown in FIG. 26, the chaos flow induction unit bodies 145 includes a plane portion 141 and at least one protruded portion 142. When the serial array direction of the chaos flow induction unit bodies 145 is the extended direction, the plane portion 141 is formed in parallel to the extended direction. At least one protruded portion 142 is formed to be protruded in a vertical direction to each of the upper surface and lower surface of the plane portion 141. It is apparent that a groove 143, i.e., a fluid channel width g (see FIG. 13), between the protruded portions 142, is formed.

In the chaos flow induction unit bodies 145, the protruded portions 142 arrayed to form an inclination angle of 0° to 90° in the extended direction. Accordingly, the groove 143, which is a space formed by the protruded portions 142, may be formed to be inclined. Diverse inclination angles may be adopted in designing. More preferably, in the chaos flow induction unit bodies 145, the protruded portions 142 arrayed to form an inclination angle of 30° to 60° in the extended direction.

FIG. 26 shows the case that an inclination angle of the protruded portion 142 formed on an upper surface of the plane portion 141 is the same as that of the protruded portion 142 formed on a lower surface of the plane portion 141. More preferably, in order to activate the induce of the chaos flow in the chaos flow induction unit bodies 145, the protruded portion 142 formed on the upper surface of the plane portion 141 may be arrayed to have an inclination angle, which is different from that of the protruded portion 142 formed on the lower surface of the plane portion 141.

As described above, since a plurality of chaos flow induction unit bodies 145 are arrayed to form the chaos flow inducing portion 140, the shape of the chaos flow inducing portion 140 may be easily changed according to diverse characteristics such as flow or concentration of the introduced original water. For example, the separation gap between each unit body may be controlled properly as needed and each unit body has different shapes.

When the chaos flow induction unit bodies 145 are formed of the plane portion 141 and the protruded portion 142 as described above, the plane portion 141 and the protruded portion 142 may be formed to be disassembled or assembled and be easily changed by simplifying of the shape in the chaos flow induction unit bodies 145. The disassembling and assembling structure may be simply realized. For example, a groove is formed on the plane portion 141 and an inserting portion is on one side of the protruded portion 142. Accordingly, the plane portion 141 and the protruded portion 142 may be disassembled or assembled by inserting the inserting portion of the protruded portion 142 into the groove of the plane portion 141. That is, diverse structures may be realized as a matter of convenience of a designer.

In the chaos flow induction unit bodies 145, the number of the protruded portions 142 provided on the plane portion 141 may vary. In order to make the change of the shape easy, the structure may be very simply realized. For example, when the structure for making disassemble and assemble possible by inserting the inserting portion of the protruded portion 142 into the groove of the plane portion 141 as exemplified above is adopted, the structure that the number of the protruded portions 142 varies may be realized by forming a plurality of grooves in the plane portion 141 and putting the protruded portions 142 in all or parts of the grooves. Accordingly, it is possible to realize diverse optimum design by increasing the number of the protruded portions 142 to induce more active chaos flow in the high concentration of the original water or by decreasing the number of the protruded portions 142 to help more smooth flow in the low concentration of the original water.

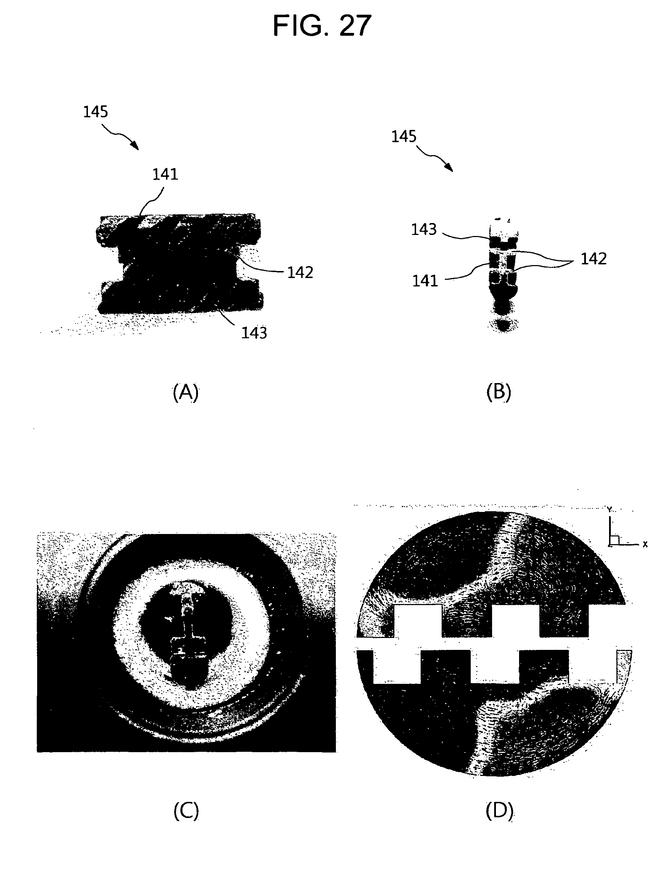

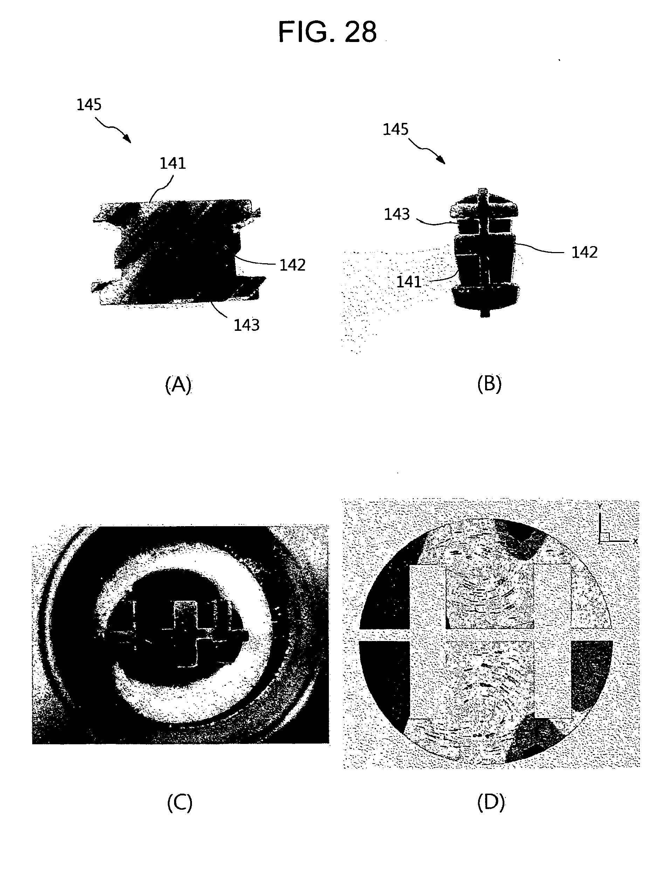

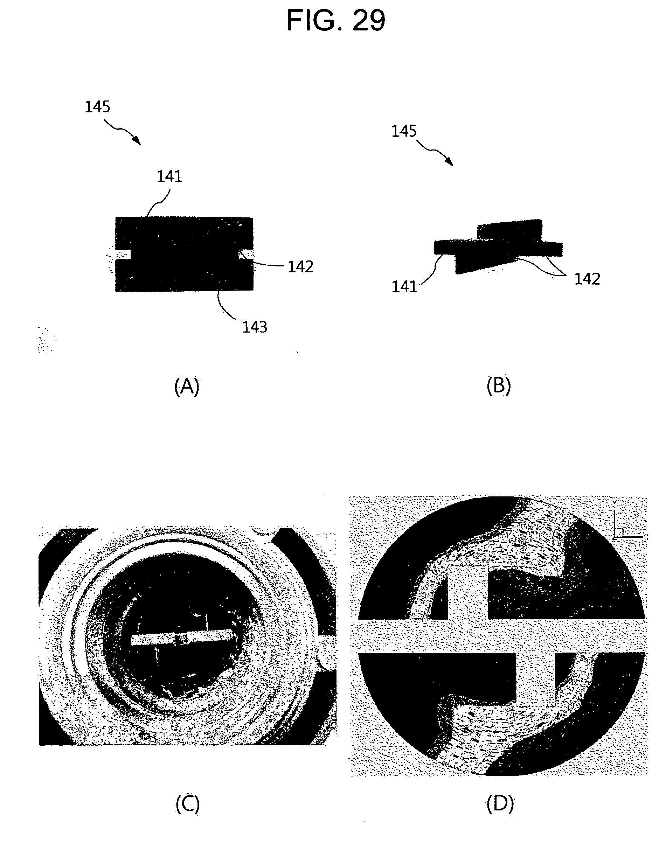

Based on the contents analyzed above, a test for designing an optimal shape of the chaos flow induction unit bodies 145 used in the filtering apparatus was performed. FIG. 27 to FIG. 29 show the flat panel shapes with the inclined groove as the basic shape described above according to first to third exemplary embodiments. In each exemplary embodiment of FIG. 27 to FIG. 29, the groove, i.e., the fluid channel width g, increases. Particularly, the third exemplary embodiment of FIG. 29 shows the case that only one protruded portion 142 is formed on the plane portion 141, i.e., the shape that the fluid channel width g is maximized. In the third exemplary embodiment of FIG. 29, the inclination angle of the protruded portion 142 formed on the upper surface of the plane portion 141 is opposite to that of the protruded portion 142 formed on the lower surface of the plane portion 141.

FIG. 29(A), FIG. 29(B), FIG. 29(C), and FIG. 29(D) respectively show a shape shown from the upper surface, a shape shown from a side, an example of insertion into the filtering apparatus, and a fluidized bed. With reference to each fluidized bed of FIG. 27(D), FIG. 28(D), and FIG. 29(D), it is known that the chaos flow is most actively induced in the fluidized bed of FIG. 29(D).

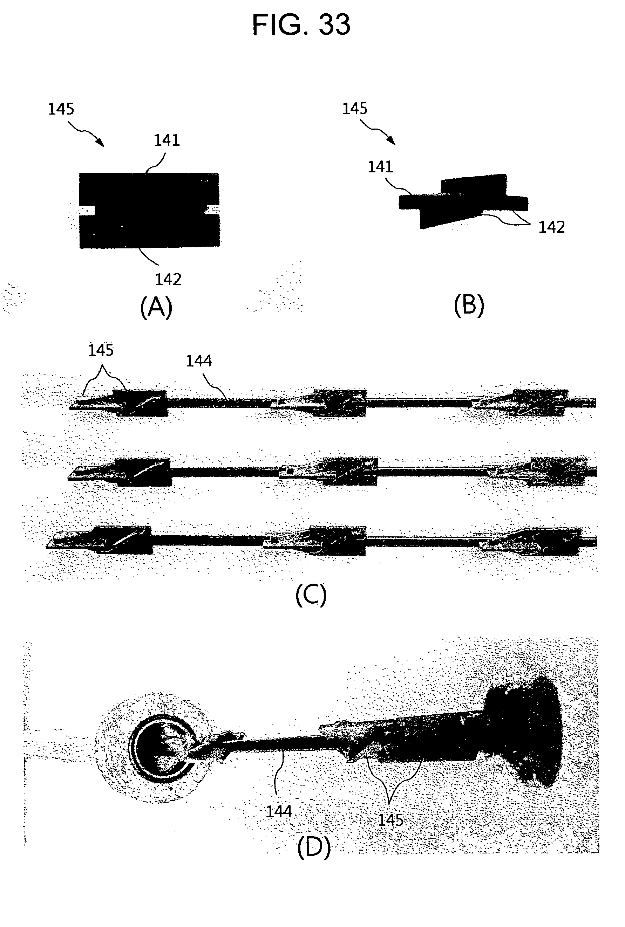

Based on the above test result, resistance due to a water current and a warm current is minimized and the power of swirl is increased. Simultaneously, the present invention suggests the optimal exemplary embodiment of FIG. 33 in consideration that as the fluid channel width g, i.e., the groove 143, gets wider, the chaos flow generating effect increases. In the optimal exemplary embodiment of FIG. 33, as shown in FIGS. 33(A), and 33(B), only one protruded portion 142 is formed on each of the upper surface and the lower surface of the plane portion 141 and an inclination angle becomes 45°. As shown in FIG. 33(B), the angle of the upper surface of the protruded portion 142 is formed in an opposite direction to the angle of the lower surface of the protruded portion 142.

Since the power of swirl and resistance are differed according to the number of the inserted chaos flow induction unit bodies 145, there are differences in flux and consumption power. In order to determine the number of the inserted chaos flow induction unit bodies 145 for reducing energy loss due to resistance and maintaining the maximum power of swirl, the tests were performed with different numbers of chaos flow induction unit bodies 145 of 100% (33 unit bodies), 50% (17 unit bodies), 33% 11 unit bodies), and 15% (5 unit bodies).

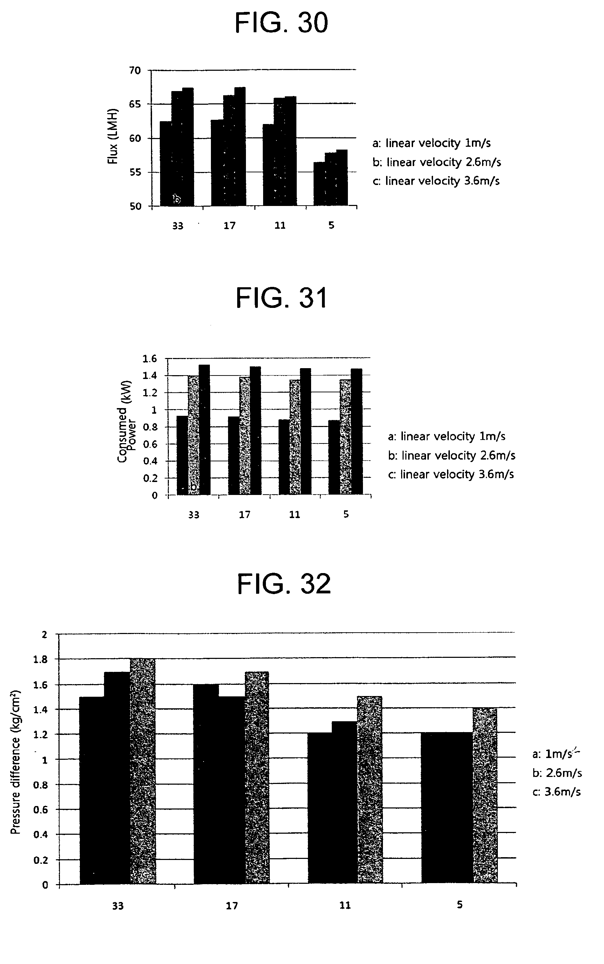

FIG. 30 to FIG. 32 show test results of flux, consumption power, and loss of head according to the number of the chaos flow induction unit bodies 145. It was determined based on the test results that the effective chaos flow induction unit bodies 145 of about 33% per one module are the most preferable in consideration of decrease of flux, consumption power and loss of head. In consideration of the test result, as shown in FIG. 339C), a separation gap is set up such that the ratio of the chaos flow induction unit bodies 145 becomes 33% inside the filtering apparatus 100 in the optimal exemplary embodiment of FIG. 33. The real insertion form is shown in FIG. 33(D).

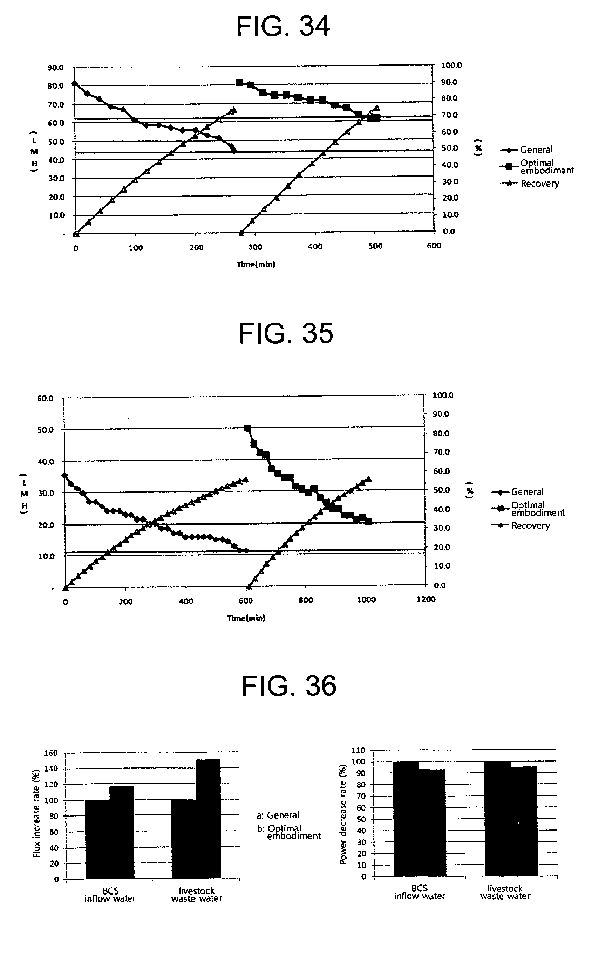

In the present invention, the actual water treatment efficiency was confirmed in case that the optimal exemplary embodiment was performed. FIG. 34 shows a test result on the performance evaluation of the chaos flow induction unit bodies 145 according to the optimal exemplary embodiment using the BCS inflow water (TS 1 %) as a subject. The test result shows the comparison result under the condition of low concentration. As shown in FIG. 34, according to the operation result that the BCS inflow water was used to the maximum concentration of 75%, when the chaos flow induction unit bodies 145 according to the optimal exemplary embodiment were adopted, flux increased to 17% on average and operation power of about 10% was reduced in comparison with the case that the chaos flow induction unit bodies 145 were not inserted. FIG. 35 shows a test result on performance evaluation of the chaos flow induction unit bodies 145 according to the optimal exemplary embodiment using undiluted solution of livestock waste water (TS 4.7%) as a subject. That is, FIG. 35 shows the test result under the condition of high concentration. As shown in FIG. 35, according to the operation result that high concentration undiluted solution of livestock waste water (TS 4.7%) was used to the maximum concentration of 56%, when the chaos flow induction unit bodies 145 according to the optimal exemplary embodiment were adopted, flux increased to 50% on average and operation power of about 5% was reduced in comparison with the case that the chaos flow induction unit bodies 145 were not inserted.

FIG. 36 is a graph showing the concise comparison result that the above test results are rearranged. When the chaos flow induction unit bodies 145 according to optimal exemplary embodiment were used, flux increased to 17% on average and operation power of about 10% was reduced in the low concentration of the BCS inflow water (TS 1 %) in comparison with the case that the chaos flow induction unit bodies 145 were not inserted. Also, flux increased to 50% on average and operation power of about 5 was reduced in the high concentration undiluted solution of livestock waste water (TS 4.7%). That is, the performance evaluation result of the chaos flow induction unit bodies 145 according to the optimal exemplary embodiment confirmed that the higher the concentration of the introduced sample becomes by the power of swirl generated by chaos flow induction unit bodies 145, the more the flux of the treated water increases.

It will be apparent that the invention is not limited to the embodiments and application fields are diverse, and various changes and modifications may be made by those skilled in the art without deviating from the basic concept and scope of the invention as set forth in the appended claims.

According to the present invention, provided is a filtering apparatus for saving energy as well as sufficiently washing a separation membrane in an environment of high concentration by efficiently generating chaos flow by using a structure of a fixed type.

**Claims**

1. A filtering apparatus (100), comprising:

    at least one flowing portion (110), which original water is brought into and flows in;
    a separation membrane (120) provided on a wall surface of the flowing portion (110) to be supported and passing and filtering the original water brought in the flowing portion (110);
    an accommodating portion (130), which accommodates the flowing portion (110) inside and which the filtered water formed by filtering the original water by the separation membrane (120) flows in and is discharged from, wherein a chaos flow inducing portion (140) for generating chaos flow is arrayed to be fixed inside the flowing portion (110), and
    wherein a plurality of separable chaos flow induction unit bodies (145) are arrayed in serial in a main flow direction to form at least one line in the chaos flow inducing portion (140).

2. The filtering apparatus of claim 1, wherein in the chaos flow inducing portion (140), when a serial array direction of the chaos flow induction unit bodies (145) is an extended direction, array angles of the chaos flow induction unit bodies (145) in the extended direction have at least one value.

3. The filtering apparatus of claim 2, wherein in the chaos flow inducing portion (140), when an array angle of a predetermined chaos flow induction unit body (145) is chosen as a reference, array angles of the chaos flow induction unit bodies (145) adjacent to the predetermined chaos flow induction unit body (145) are vertical to the array angle of the predetermined chaos flow induction unit body (145).

4.  The filtering apparatus of any one of claims 1-3, wherein in the chaos flow inducing portion (140), the chaos flow induction unit bodies (145) are separately arrayed at more than one predetermined interval(s).

5.  The filtering apparatus of any one of claims 1-4, wherein the chaos flow inducing portion (140) further comprises a separation supporter (144) for separately fixing and supporting the chaos flow induction unit bodies (145).

6.  The filtering apparatus of any one of claims 1-5, wherein in the chaos flow inducing portion (140), more than two chaos flow induction unit bodies (145) are densely arrayed to make a set and sets of the chaos flow induction unit bodies (145) are separately arrayed at more than one predetermined interval(s).

7.  The filtering apparatus of claim 6, wherein the chaos flow inducing portion (140) further comprises a separation supporter (144) for separately fixing and supporting the chaos flow induction unit bodies (145).

8.  The filtering apparatus of claim 1, wherein when a serial array direction of the chaos flow induction unit bodies (145) is an extended direction, the chaos flow induction unit bodies (145) comprise a plane portion (141) formed in a direction, which is parallel to the extended direction, and at least one protruded portion (142) formed to be protruded from each of an upper surface and a lower surface of the plane portion (141).

9.  The filtering apparatus of claim 8, wherein in the chaos flow induction unit bodies (145), the protruded portions (142) are arrayed to form inclination angles of 0° to 90° to the extended direction.

10. The filtering apparatus of claim 8 or claim 9, wherein in the chaos flow induction unit bodies (145), the protruded portions (142) are arrayed to form inclination angles of 30° to 60° to the extended direction.

11. The filtering apparatus of claim 8 or claim 9, wherein in the chaos flow induction unit bodies (145), the protruded portion (142) formed on the upper surface of the plane portion (141) has an inclination angle, which is different from that of the protruded portion (142) formed on the lower surface of the plane portion (141).

12. The filtering apparatus of any one of claims 8-11, wherein in the chaos flow induction unit bodies (145), the plane portion (141) and the protruded portion (142) are formed to be disassembled and assembled.

13. The filtering apparatus of any one of claims 8-12, wherein in the chaos flow induction unit bodies (145), the number of the protruded portions (142) formed on the plane portion (141) varies.

# FIG. 1

## *Prior Art*

(A)

(B)

(C)

(D)

(E)

# FIG. 2

# FIG. 3

Re=100

RL-type

(A)

RR-type

(B)

# FIG. 4

(A) Re=10

(B) Re=100

# FIG. 5

(A) Re=10

(B) Re=100

## FIG. 6

## FIG. 7

# FIG. 8

(A) Re=1000          (B) Re=2000          (C) Re=10000

# FIG. 9

## FIG. 10

## FIG. 11

Re=10

(A)

Re=1000

(B)

# FIG. 12

Re=10

(A)

Re=1000

(B)

# FIG. 13

# FIG. 14

| L/D | Flow field in 3rd inducer |
|-----|---------------------------|
| 1.5 | |
| 3 | |
| 4.5 | |

Flow field according L/D change (t=1mm, d/D=0.5, Re=500)

# FIG. 15

| t (mm) | Flow field in 3rd inducer |
|--------|---------------------------|
| 1 | |
| 2.5 | |

Flow field according t change (L/D=3, d/D=0.5, Re=500)

# FIG. 16

| d/D | Flow field in 3rd inducer |
|---|---|
| 0.5 | |
| 1 | |

Flow field according d/D change (L/D=3, t=1mm, Re=500)

# FIG. 17

| Re | Flow field in 3rd inducer |
|---|---|
| 100 | |
| 500 | |
| 1,000 | |
| 5,000 | |

Flow field according Re change (L/D=3, t=1mm, d/D=0.5)

# FIG. 18

# FIG. 19

| t L/D | 1mm | 2.5mm |
|---|---|---|
| 1.5 | | |
| 3 | | |
| 4.5 | | |

(A)  $d/D = 0.5$, $Re = 500$

| t L/D | 1mm | 2.5mm |
|---|---|---|
| 1.5 | | |
| 3 | | |
| 4.5 | | |

(B)  $d/D = 1$, $Re = 500$

# FIG. 20

| Re | 100 | 500 | 1,000 | 5,000 |
|---|---|---|---|---|
| | | | | |

Particle tracking analysis result according to
Reynolds number's change (L/D=3, t=1mm, d/D=0.5)

# FIG. 21

Pressure loss according to L/D and d/D (t=1mm, Re=500)

# FIG. 22

Pressure change along z-axis according to
Reynolds number and t (L/D=3, d/D=0.5)

# FIG. 23

100

130

110

120

145

140

Extended direction

(A)

130

Filtered water

Original water

110

120

(B)

130

110

130

(C)

# FIG. 24

(A)

(B)          (C)          (D)

# FIG. 25

145

(A)

145

144

(B)

145

144

(C)

145

144

(D)

# FIG. 26

145

142

143

141

Inclination angle

Extended direction

# FIG. 27

(A)

(B)

(C)

(D)

# FIG. 28

(A)

(B)

(C)

(D)

# FIG. 29

(A)

(B)

(C)

(D)

# FIG. 30

a: linear velocity 1m/s
b: linear velocity 2.6m/s
c: linear velocity 3.6m/s

# FIG. 31

a: linear velocity 1m/s
b: linear velocity 2.6m/s
c: linear velocity 3.6m/s

# FIG. 32

a: 1m/s
b: 2.6m/s
c: 3.6m/s

# FIG. 33

(A)

(B)

(C)

(D)

# FIG. 34

# FIG. 35

# FIG. 36

Europäisches
Patentamt
European
Patent Office
Office européen
des brevets

# EUROPEAN SEARCH REPORT

Application Number

EP 12 00 2934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 922 220 A (MIDDLEMAN STANLEY ET AL) 25 November 1975 (1975-11-25) * column 2, line 61 - column 4, line 42; claims; figures * * the whole document * | 1-13 | INV. B01D65/08 B01D63/06 |
| X | US 4 902 418 A (ZIEGLER HEINRICH [CH]) 20 February 1990 (1990-02-20) * column 1, line 4 - line 46; figure 8 * * column 5, line 3 - line 6 * * the whole document * | 1-13 | |
| X | US 3 672 509 A (BUCHMANN PAUL ET AL) 27 June 1972 (1972-06-27) * column 1 * * column 6, line 15 - line 75; figures 1-2, 4 * * the whole document * | 1-13 | |
| X | US 3 256 678 A (JEAN-HENRI BERTIN ET AL) 21 June 1966 (1966-06-21) * claims 1, 3; figures 1, 8 * | 1-13 | TECHNICAL FIELDS SEARCHED (IPC) |
| A | US 4 123 178 A (SALZMAN RONALD N ET AL) 31 October 1978 (1978-10-31) * column 2, line 12 - line 18 * * column 6, line 4 - column 7, line 49; figures 1,7-7B * * the whole document * | 4 | B01D B01F |

The present search report has been drawn up for all claims

| Place of search | Date of completion of the search | Examiner |
|---|---|---|
| Munich | 5 February 2013 | Veríssimo, Sónia |

EPO FORM 1503 03.82 (P04C01)

## ANNEX TO THE EUROPEAN SEARCH REPORT
## ON EUROPEAN PATENT APPLICATION NO.                    EP 12 00 2934

This annex lists the patent family members relating to the patent documents cited in  the above-mentioned European search report.
The members are as contained in the European Patent Office EDP file on
The European Patent Office is in no way liable for these particulars which are merely given for the purpose of information.

05-02-2013

| Patent document cited in search report | | Publication date | Patent family member(s) | | Publication date |
|---|---|---|---|---|---|
| US 3922220 | A | 25-11-1975 | CA | 1024902 A1 | 24-01-1978 |
| | | | DD | 115040 A5 | 12-09-1975 |
| | | | DE | 2448000 A1 | 07-05-1975 |
| | | | FR | 2249695 A1 | 30-05-1975 |
| | | | GB | 1481335 A | 27-07-1977 |
| | | | IT | 1016196 B | 30-05-1977 |
| | | | JP | 50075176 A | 20-06-1975 |
| | | | NL | 52674 C | 05-02-2013 |
| | | | NL | 7411228 A | 07-05-1975 |
| | | | SE | 384973 B | 31-05-1976 |
| | | | SE | 7412529 A | 05-05-1975 |
| | | | US | 3922220 A | 25-11-1975 |
| US 4902418 | A | 20-02-1990 | CA | 1292170 C | 19-11-1991 |
| | | | CH | 670573 A5 | 30-06-1989 |
| | | | DE | 3677352 D1 | 07-03-1991 |
| | | | EP | 0226788 A1 | 01-07-1987 |
| | | | JP | 62125807 A | 08-06-1987 |
| | | | US | 4902418 A | 20-02-1990 |
| US 3672509 | A | 27-06-1972 | CA | 946296 A1 | 30-04-1974 |
| | | | CH | 511623 A | 31-08-1971 |
| | | | DE | 2025420 A1 | 14-01-1971 |
| | | | FR | 2054351 A5 | 16-04-1971 |
| | | | GB | 1292478 A | 11-10-1972 |
| | | | LU | 59061 A1 | 18-11-1969 |
| | | | US | 3672509 A | 27-06-1972 |
| US 3256678 | A | 21-06-1966 | BE | 599741 A1 | 29-05-1961 |
| | | | CH | 370393 A | 15-07-1963 |
| | | | DE | 1200260 B | 09-09-1965 |
| | | | FR | 1257087 A | 31-03-1961 |
| | | | GB | 936421 A | 11-09-1963 |
| | | | LU | 39740 A1 | 04-04-1961 |
| | | | NL | 124685 C | 05-02-2013 |
| | | | NL | 260972 A | 05-02-2013 |
| | | | US | 3256678 A | 21-06-1966 |
| US 4123178 | A | 31-10-1978 | BE | 865119 A1 | 17-07-1978 |
| | | | CA | 1111020 A1 | 20-10-1981 |
| | | | US | 4123178 A | 31-10-1978 |

EPO FORM P0459

For more details about this annex : see Official Journal of the European Patent Office, No. 12/82

## REFERENCES CITED IN THE DESCRIPTION

**Patent documents cited in the description**

- KR 1020110109868
- KR 0916940
- US 5628909 A
- KR 100916940

**Non-patent literature cited in the description**

- **KANG, T. G. ; KWON, T. H.** Colored particle tracking method for mixing analysis of chaotic micromixers. *J. Micromech. Microeng.,* 2004, vol. 14, 891-899
- **A.D. STROOCK et al.** *Science,* 2002, vol. 295, 647-51
- **T.G. KANG ; T.H. KWON.** *J Micromech Microeng,* 2004, vol. 14, 891-99
- **T.G. KANG et al.** *Microfluid Nanofluid,* 2008, vol. 4, 589-99
- **KANG, T. G. ; KWON, T. H.** Colored particle tracking method for mixing analysis of chaotic micromixers. *J. Micromech. Microeng,* 2004, vol. 14, 891-899